# FASCICULE DE BREVET EUROPEEN

(11) **EP 4 323 803 B1**
(45) Date de publication et mention de la délivrance du brevet: **23.09.2026**
(21) Numéro de dépôt: 22723133.9
(22) Date de dépôt: 15.04.2022
(51) Int. Cl.: G01S 13/87, G01S 13/76, G01S 5/02, G01S 5/14

(54) **PROCEDE DE TRANSFERT D'UNE INFORMATION PAR UNE BALISE MOBILE**
VERFAHREN ZUR INFORMATIONSÜBERTRAGUNG ÜBER EINE MOBILE BAKE
METHOD FOR TRANSFERRING INFORMATION VIA A MOBILE BEACON

(30) Priorité: 16.04.2021 FR 2103948
(43) Date de publication de la demande: 21.02.2024
(73) Titulaire: Apitrak, 38240 Meylan (FR)
(72) Inventeur: ANTOLINOS, Luc, 31200 TOULOUSE (FR); BONNAL, Julien, 31200 TOULOUSE (FR); POMARES, Yoni, 31200 TOULOUSE (FR); MARTIN, Frédéric, 31200 TOULOUSE (FR)
(74) Mandataire: Oak & Fox
(86) Numéro de dépôt international: PCT/EP2022/060177
(87) Numéro de publication internationale: WO 2022/219184

(56) Documents cités:
- EP-A1- 3 680 687
- WO-A1-2010/125767
- WO-A1-2018/067765
- US-A1- 2016 012 263
- US-B2- 10 817 769

## Description

Le domaine de l'invention concerne le domaine des procédés visant à transmettre au moins une information au moyen d'une interface de communication. Le domaine de l'invention se rapporte plus particulièrement au domaine des procédés de transmission d'une ou plusieurs données émises par une étiquette radio. Enfin, le domaine de l'invention se rapporte plus spécifiquement au domaine des procédés de transmission, au moyen d'une balise mobile, d'une donnée de localisation et d'au moins une donnée émise par une étiquette radio UWB (Ultra-Wide Band).

Il existe dans l'art antérieur différentes solutions permettant d'assurer la transmission d'une donnée d'un signal UWB reçu. A titre d'exemple, la demande EP3680687 décrit une méthode pour déterminer la localisation d'une étiquette UWB à l'aide d'un signal échangé entre une balise fixe et l'étiquette UWB et une méthode pour adapter le signal échangé en fonction de la position de l'étiquette UWB.

On connaît également, dans l'état de la technique, les documents US2016/0012263 et WO2018067765.

Toutefois, un problème persiste, d'une part lorsque la mise en place d'une infrastructure de détection fixe s'avère inadaptée à l'environnement ou encore lorsque les étiquettes UWB se trouvent dans des zones dites « zones d'ombre », qui sont des zones masquées ou éloignées de l'infrastructure de détection et dans lesquelles les étiquettes UWB ne peuvent être correctement détectées ou énergisées. Il existe à ce titre un réel besoin de mettre en place une solution permettant la détection des signaux UWB des étiquettes positionnées dans ces « zones d'ombre ». Il existe également un besoin de mettre en place une solution de détection de signaux UWB dans les environnements où la mise en place d'une infrastructure fixe n'est pas adaptée, par exemple pour des raisons de coûts financiers ou parce que des contraintes d'agencement ne le permettent pas.

L'invention détaillée ci-après permet de résoudre les inconvénients précités en proposant une solution mobile d'alimentation en énergie UHF (Ultra-Haute Fréquence) et de détection de signaux UWB.

### RESUME DE L'INVENTION

Selon un premier aspect, l'invention concerne un procédé pour transmettre une information d'au moins une première étiquette radio UWB au moyen d'une balise mobile comportant des moyens d'émission et de réception, le procédé comprenant :
▪ Emission d'un premier signal énergisant au moyen d'un émetteur d'un signal énergisant de la balise mobile;
▪ Réception par la balise mobile au moyen d'un récepteur UWB d'un premier signal UWB d'au moins la première étiquette radio UWB énergisée par le premier signal énergisant ;
▪ Enregistrement d'une première donnée d'étiquette décodée du premier signal UWB reçu dans une mémoire de la balise mobile;
▪ Horodatage de ladite réception du premier signal UWB pour produire une première donnée d'horodatage associée à la première donnée;
▪ Détermination d'une première position de ladite balise mobile au moyen d'un système de localisation;
▪ Association de la première donnée de position de la balise mobile à ladite première donnée d'étiquette, ladite donnée de position permettant de localiser ladite balise mobile,
▪ Emission d'une première information par la balise mobile comportant ladite première donnée d'étiquette et la première donnée d'horodatage et émission d'une seconde information par la balise mobile comportant la première donnée de position vers au moins un équipement d'un réseau de données.

Un avantage est de pouvoir récupérer et transmettre, par exemple au sein d'un serveur de données, différentes informations associées à une étiquette radio, pour identifier ladite étiquette radio ou pour associer la position de l'étiquette radio à la position de la balise mobile. Un autre avantage est de pouvoir énergiser au moyen d'une source UHF une étiquette radio située dans une zone d'ombre qui ne peut pas être détectée par une infrastructure fixe.

Selon un exemple, le premier signal énergisant est un signal UHF et l'émetteur du signal énergisant de la balise mobile est un émetteur UHF.

Selon un mode de réalisation, la première information est émise vers un serveur de données par une liaison Wi-Fi, 4G, 5G ou Bluetooth et la seconde information est émise sous la forme d'un message UWB vers un système de localisation comportant au moins une balise fixe comportant des moyens de réception de signaux UWB pour calculer par trilatération la position de la balise mobile, ladite association entre la première donnée de position de la balise mobile à ladite première donnée d'étiquette étant réalisée par un serveur de données et permettant de localiser ladite balise mobile.

Un avantage est de pouvoir s'appuyer sur la présence d'une infrastructure fixe de détection UWB pour calculer une position précise de la balise mobile dans l'environnement.

Selon un mode de réalisation, le procédé comprend :
▪ L'émission d'un second signal UWB par la balise mobile au moyen d'un émetteur UWB comportant au moins une donnée d'identification de ladite balise mobile encodée dans ledit second signal UWB;
▪ La réception du second signal UWB par le système de localisation comportant une pluralité de balises radio UWB comportant des moyens de réception radio et des moyens pour décoder une information et horodater l'arrivée dudit second signal UWB;
▪ La transmission d'une information de détection du second signal UWB à la balise mobile,
▪ Le calcul, au moyen de l'ensemble des seconds signaux reçus par chacune des balises radio, d'une position de la balise mobile.

Un avantage est de pouvoir s'assurer qu'un signal UWB émis par la balise mobile est bien détecté par une pluralité de balises de l'infrastructure.

Selon l'invention, le procédé comprend :
▪ l'émission d'une pluralité de seconds signaux UWB par la balise mobile au moyen d'un émetteur UWB, chaque second signal UWB comportant au moins une donnée encodée d'identification de ladite balise mobile;
▪ la réception des second signaux UWB par le système de localisation comportant une pluralité de balises radio UWB, ledit système de localisation comportant des moyens de réception radio et des moyens pour décoder les données d'identification et pour horodater l'arrivée des seconds signal UWB ;
▪ la transmission, à la balise mobile par le système de localisation, d'une information de détection du second signal UWB;
▪ le calcul, au moyen de pluralité de seconds signaux reçus par chacune des balises radio, de la première donnée de position de la balise mobile.

Selon un mode de réalisation, le procédé comprend :
▪ L'émission du second signal UWB par la balise mobile comportant au moins une donnée d'identification de ladite balise mobile encodée dans ledit second signal UWB, ladite émission générant automatiquement l'émission de l'information de détection par un système UWB lorsque ce dernier reçoit ladite donnée d'identification,
▪ L'émission d'une pluralité de seconds signaux UWB à une fréquence augmentée pendant un second intervalle de temps en cas de non-réception de l'information de détection au terme d'un premier intervalle de temps.

Selon un mode de réalisation, le procédé comprend :
▪ l'émission d'un second signal UWB par la balise mobile au moyen d'un émetteur UWB, ledit second signal UWB comportant au moins une donnée encodée d'identification de ladite balise mobile, ladite émission entrainant l'activation d'une horloge pour mesurer un premier intervalle de temps,
▪ l'émission d'une pluralité de second signaux UWB à une fréquence augmentée pendant un second intervalle de temps en cas de non-réception d'une information de détection au terme d'un premier intervalle de temps, ladite information de détection indiquant la détection du second signal UWB par un système de réception UWB.

Un avantage est de faire en sorte que la balise mobile soit bien détectée par l'infrastructure de détection lorsque le premier signal UWB émis n'a pas permis ladite détection de la balise mobile.

Selon un mode de réalisation, la première information et la seconde information sont émises vers un serveur de données par une interface de communication sans fil, l'association entre la première donnée de position de la balise mobile et la première donnée d'étiquette étant réalisée au sein de la balise mobile, ladite première donnée de position étant émise vers la balise mobile par un système de localisation.

Un avantage est de pouvoir associer la position de la balise mobile à la position d'une étiquette UWB à l'origine de l'émission d'un signal UWB comprenant la première donnée d'étiquette.

Selon un mode de réalisation, la première donnée de position est émise par :
▪ Une étiquette de référence de position connue;
▪ Un système de géolocalisation par satellite;
▪ Un système de géolocalisation par géocodeur ;
▪ Un système de géolocalisation par Wi-Fi ;
▪ Un système de géolocalisation par utilisation d'un opérateur de télécommunication,
▪ Un système de géolocalisation par RFID.

Un avantage est de pouvoir adapter le système de localisation au contexte dans lequel évolue la balise mobile. A titre d'exemple, un système de localisation comprenant une étiquette de référence sera plus adapté dans un environnement intérieur qu'une géolocalisation par satellite.

Optionnellement, la balise mobile B_{M} reçoit la première donnée de position.

Selon un mode de réalisation, le procédé comprend :
▪ L'émission d'un troisième signal UWB comprenant une première information temporelle et une seconde donnée par au moins une étiquette radio UWB de référence de position connue;
▪ La réception du troisième signal UWB par la balise mobile;
▪ L'enregistrement de l'information temporelle et de la seconde donnée décodées du signal UWB reçu dans une mémoire de la balise mobile;
▪ L'horodatage de ladite réception du troisième signal UWB pour produire une seconde donnée d'horodatage associée à la réception de l'information temporelle et de la seconde donnée,
▪ L'émission d'une troisième information comportant la première information temporelle, la seconde donnée et la seconde donnée d'horodatage vers au moins un équipement du réseau de données.

Un avantage est de pouvoir calculer un temps de parcours d'un signal UWB entre une étiquette de référence de position connue et la balise mobile.

Selon un mode de réalisation, le procédé comprend :
▪ la réception, par la balise mobile et au moyen d'un récepteur UWB, d'un troisième signal UWB émis par au moins une étiquette radio UWB de référence de position connue, ledit troisième signal UWB comprenant une première information temporelle encodée d'horodatage de l'émission dudit troisième signal UWB et comprenant une seconde donnée encodée d'identification de l'étiquette radio UWB de référence ;
▪ l'horodatage de ladite réception du troisième signal UWB pour produire une seconde donnée d'horodatage de la réception de l'information temporelle et de la seconde donnée,
▪ l'enregistrement de la première information temporelle décodée et de la seconde donnée d'identification décodée dans une mémoire de la balise mobile;
▪ l'émission, par la balise mobile, d'une troisième information comportant la première information temporelle, la seconde donnée et la seconde donnée d'horodatage vers au moins un équipement du réseau de données.

Selon un mode de réalisation, le procédé comprend :
▪ L'émission par la balise mobile et par une pluralité de balises radio UWB d'une pluralité de troisièmes informations comportant chacune la première information temporelle, la seconde donnée et une donnée d'horodatage au moyen d'une interface de communication vers au moins un équipement du réseau de données;
▪ La détermination pour la balise mobile et pour chaque balise radio UWB d'une information temporelle de propagation de chaque troisième signal UWB, ladite information temporelle de propagation étant déterminée sur la base de la première information temporelle et de la donnée d'horodatage;
▪ La comparaison des informations temporelles de propagation de chaque troisième signal UWB au moyen d'un comparateur,
▪ La synchronisation des horloges de la balise mobile et des balises radio UWB entre elles en fonction des informations temporelles de propagation de chaque troisième signal UWB

Un avantage est de synchroniser les horloges d'une pluralité de balises mobiles ou fixes pour permettre la mise en œuvre de calculs de positions par trilatération.

Selon un mode de réalisation, le procédé comprend :
▪ l'émission, par la balise mobile et par une pluralité de balises radio UWB, d'une pluralité de troisièmes informations au moyen d'une interface de communication et vers au moins un équipement du réseau de données ;
▪ le calcul, pour la balise mobile et pour chaque balise radio UWB et au moyen d'un calculateur, d'une information temporelle de propagation de chaque troisième signal UWB, chaque information temporelle de propagation étant calculée à partir de chaque première information temporelle et de chaque seconde donnée d'horodatage ;
▪ la comparaison, par un comparateur, des informations temporelles de propagation de chaque troisième signal UWB,
▪ la synchronisation d'une horloge de la balise mobile et d'une horloge de chaque balise radio UWB entre elles en fonction du résultat des comparaisons des informations temporelles de propagation.

Selon un mode de réalisation, le procédé comprend la mise en œuvre d'au moins un calcul d'une position relative d'au moins la première étiquette radio UWB par trilatération, ledit calcul étant mis en œuvre au moyen d'un calculateur sur la base d'au moins un premier signal UWB émis par la première étiquette radio UWB et reçu par la balise mobile et par au moins deux balises radio UWB.
Selon un mode de réalisation, le procédé comprend la mise en œuvre, au moyen d'un calculateur, d'au moins un calcul par trilatération d'une position relative de la première étiquette radio UWB, à partir du premier signal UWB émis par ladite première étiquette radio UWB et reçu par la balise mobile et par au moins deux autres balises radio UWB.

Un avantage est d'utiliser la balise mobile pour réaliser au moins un calcul d'une position d'un objet par trilatération lorsque la position de ladite balise mobile est connue.

Selon un mode de réalisation, le procédé comprend
▪ La réception d'une première quantité d'énergie UHF par la balise mobile au moyen d'un récepteur UHF;
▪ La comparaison, au moyen d'un comparateur, de la première quantité d'énergie UHF reçue avec une valeur d'énergie seuil prédéterminée;
▪ L'émission du premier signal UHF énergisant au moyen de l'émetteur UHF par la balise mobile si la première quantité d'énergie UHF reçue est inférieure à la valeur d'énergie seuil prédéterminée,
▪ La réduction de l'énergie émise par l'émetteur UHF de la balise mobile si la première quantité d'énergie UHF reçue est supérieure à la valeur d'énergie seuil prédéterminée.

Un avantage est de pouvoir « cartographier » l'énergie UHF de plusieurs zones et d'alimenter en énergie UHF les zones les plus faiblement alimentées. Avantageusement, l'émission du premier signal UHF peut entraîner l'émission de signaux UWB par des étiquettes présentes dans la zone initialement peu énergisée.

Selon un mode de réalisation, le procédé comprend:
▪ La mesure d'une valeur de distance entre un objet et la balise mobile au moyen d'un capteur de distance;
▪ La comparaison de la valeur de distance mesurée avec une valeur de distance seuil prédéterminée,
▪ La modulation de l'émission du premier signal UHF énergisant par l'émetteur UHF de la balise mobile si la valeur de distance mesurée est inférieure à la valeur de distance seuil prédéterminée.

Avantageusement, la consommation énergétique globale peut être réduite en en réduisant la puissance de signal émise lorsque la source d'alimentation en énergie UHF se trouve proche d'une étiquette radio UWB à énergiser.

Selon un mode de réalisation, le premier signal UWB reçu est associé à une information de contexte, ladite information de contexte étant traitée par des moyens de traitement pour déterminer une donnée d'identification d'au moins une balise mobile ayant émis un premier signal UHF énergisant à l'origine de l'émission par la première étiquette radio UWB dudit premier signal UWB reçu par la balise mobile.

Selon un mode de réalisation, le premier signal UWB reçu par la balise mobile est associé à une information de contexte correspondant à une information sur l'environnement dans lequel évolue la balise mobile, et dans lequel la première information émise vers l'équipement d'un réseau de données comprend l'information de contexte, l'information de contexte étant traitée par des moyens de traitement pour déterminer une donnée d'identification de la balise mobile ayant émis le premier signal énergisant à l'origine de l'émission par la première étiquette radio UWB dudit premier signal UWB reçu par ladite balise mobile.

Un avantage est de pouvoir identifier précisément une balise mobile en fonction de différents paramètres physiques mesurés par exemple au moyen de capteurs.

Selon un autre aspect, l'invention concerne une balise mobile comprenant des moyens d'émission et de réception configurée pour mettre en œuvre le procédé selon l'un quelconque des modes de réalisation précités.

Selon un autre aspect, l'invention concerne une balise mobile comprenant des moyens d'émission d'un signal énergisant, des moyens de réception de signaux UWB, un calculateur et une mémoire, et configurée pour mettre en œuvre le procédé selon l'un quelconque des modes de réalisation précités.

Selon un mode de réalisation, la balise mobile comprend au moins deux antennes d'émission, chaque antenne d'émission étant configurée pour émettre au moins une portion du premier signal UHF énergisant. Un avantage est de pouvoir fournir une énergie UHF à une pluralité d'étiquettes radio qui se trouvent chacune à des positions différentes. Un autre avantage est d'augmenter la couverture UHF de la balise mobile lorsque le contrôle de la directivité du faisceau UHF est rendu difficile par la configuration matérielle, par exemple lorsque la balise mobile est montée sur un chariot mobile.

Selon un autre aspect, l'invention concerne un chariot mobile comportant une balise mobile selon l'un quelconque des modes de réalisation précités.

Selon un autre aspect, l'invention concerne un élément embarqué par un utilisateur comportant une balise mobile.

Selon un autre aspect, l'invention concerne un système comportant une balise mobile selon l'un quelconque des modes de réalisation précités et comportant au moins une première étiquette radio UWB.

Optionnellement, la première étiquette radio est configurée pour émettre le premier signal UWB.

### Brève description des figures

D'autres caractéristiques et avantages de l'invention ressortiront à la lecture de la description détaillée qui suit, en référence aux figures annexées, qui illustrent :
- Fig.1 : Un logigramme du procédé selon l'invention lorsqu'il comprend le stockage dans une mémoire de la balise mobile d'une première donnée.
- Fig.2 : Un logigramme du procédé selon l'invention lorsqu'il comprend la transmission d'une pluralité d'informations vers un équipement d'un réseau de données.
- Fig.3: Un logigramme du procédé selon l'invention, le procédé comprenant la réception d'une information de détection par la balise mobile.
- Fig.4 : Un logigramme du procédé selon l'invention lorsqu'il comprend l'émission d'une pluralité de signaux UWB à une fréquence augmentée
- Fig.5 : Un logigramme du procédé selon l'invention lorsqu'il comprend la réception d'un signal UWB émis par une étiquette de référence.
- Fig.6 : Un logigramme du procédé selon l'invention lorsqu'il comprend la comparaison d'une quantité d'énergie UHF avec une valeur d'énergie seuil.
- Fig.7 : Un logigramme du procédé selon l'invention lorsqu'il comprend la comparaison d'une valeur de distance avec une valeur de distance seuil.
- Fig.8 : Un schéma d'un chariot mobile comprenant une balise mobile.
- Fig.9 : Une illustration de la balise mobile lorsqu'elle est embarquée par un utilisateur.

### DESCRIPTION DETAILLEE

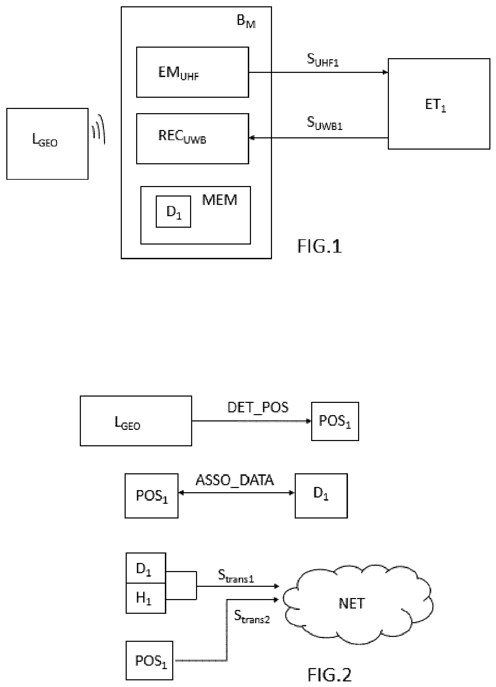

La figure 1 décrit un procédé pour transmettre une information d'au moins une première étiquette radio UWB au moyen d'une balise mobile B_{M} selon un premier aspect de l'invention, la balise mobile B_{M} comprenant des moyens d'émission et de réception.

### Emetteur UHF de la balise mobile

Selon un mode de réalisation, la balise mobile B_{M} comprend un émetteur d'énergie. L'émetteur d'énergie est par exemple un émetteur UHF (ultra haute fréquence) EM_{UHF}. Dans la suite de la description, l'émetteur d'énergie de la balise mobile B_{M} sera décrit par l'exemple d'un émetteur UHF. Toutefois, tout type d'émetteur visant à fournir une énergie à diverses fréquences pour alimenter un récepteur est susceptible d'être mis en œuvre dans le cadre de l'invention. L'émetteur UHF EM_{UHF} est configuré pour émettre un premier signal UHF S_{UHF1} énergisant. Selon un exemple, le premier signal UHF S_{UHF1} est émis à des fréquences radio comprises entre 25 MHz et 5 GHz et plus particulièrement dans la gamme 225 MHz et 3400 MHz. Selon divers exemples, la plage de fréquence exploitée comprend une plage WI-FI ou encore une plage RFID (Radio Frequency Identification). Plus généralement, toute plage de fréquence disponible possédant de la puissance est susceptible d'être exploitée.

Selon un mode de réalisation en référence à la figure 1, l'émetteur UHF est configuré pour transmettre le premier signal UHF S_{UHF1} en direction d'une première étiquette radio ET₁. La première étiquette radio ET₁ comprend alors des moyens de réception pour réceptionner ledit signal énergisant S_{UHF1}. Un avantage est de fournir une énergie radioélectrique à l'étiquette radio pour lui permettre d'émettre un signal, notamment un signal UWB lorsque l'étiquette comprend des moyens d'émission UWB.

Selon un mode de réalisation, l'émetteur UHF EM_{UHF} comprend une pluralité d'antennes d'émission. Chaque antenne d'émission est par exemple orientée dans une direction différente par rapport aux autres antennes d'émission. Selon une variante, les antennes d'émission sont orientées dans la même direction. Chaque antenne d'émission est configurée pour émettre au moins une partie du signal UHF S_{UHF1} énergisant. Un avantage est de pouvoir fournir une énergie UHF à plusieurs étiquettes radio qui se trouvent chacune à des positions différentes. Un autre avantage est d'augmenter la couverture UHF de la balise mobile lorsque le contrôle de la directivité du faisceau UHF est rendu difficile par la configuration matérielle, par exemple lorsque la balise mobile est rendue solidaire d'un élément susceptible de se déplacer tel qu'un chariot mobile.

Dans un mode de réalisation, la pluralité d'antennes d'émission comprend une antenne réseau à commande de phases. Les phases des signaux alimentant chacune des antennes peuvent être ajustées, par exemple pour obtenir un diagramme de rayonnement spécifique.

Dans un mode de réalisation, la puissance du signal UHF délivrée par chacune des antennes est modulable. Par « modulable », on entend que l'intensité ou la puissance du signal UHF délivrée par l'une des antennes peut être contrôlée, par exemple par des moyens de contrôle. Les moyens de contrôle peuvent être contrôlés par un utilisateur. Le contrôle par un utilisateur est par exemple mis en œuvre au moyen d'une interface utilisateur d'un dispositif électronique comprenant la balise mobile B_{M} ou appairé avec ladite balise mobile B_{M}. Dans un exemple de réalisation, les moyens de contrôle sont configurés pour contrôler au moins une antenne d'émission. Par « contrôler », on entend aussi bien « moduler le signal UHF délivré par une antenne d'émission » que la mise à l'arrêt d'une antenne d'émission. Par « mise à l'arrêt », on entend qu'une antenne d'émission ne délivre plus le premier signal UHF S_{UHF1} énergisant. Cette configuration est particulièrement avantageuse pour concentrer le premier signal UHF S_{UHF1} en sortie d'une unique antenne d'émission lorsqu'une étiquette UWB se trouve en regard de ladite antenne d'émission. La position de la balise mobile B_{M} peut alors avantageusement être associée à la position de l'étiquette à l'origine de l'émission dudit signal UWB.

Dans un mode de réalisation, chaque antenne de la pluralité d'antennes d'émission est configurée pour délivrer une partie du premier signal UHF S_{UHF1} énergisant. Cela est particulièrement avantageux pour permettre une couverture UHF plus large dans la zone d'émission, notamment lorsqu'une étiquette UWB à énergiser n'a pas encore été localisée.

### Récepteur UWB de la balise mobile

La balise mobile B_{M} comprend un récepteur UWB (Ultra-Wide Band) REC_{UWB}. Le récepteur UWB REC_{UWB} est apte à réceptionner au moins un signal UWB. Le signal UWB reçu peut par exemple être un premier signal UWB S_{UWB1} provenant de la première étiquette UWB ET₁ énergisée par le premier signal UHF S_{UHF1}. Un avantage est de pouvoir associer la position de la première étiquette UWB ET₁ à l'origine de l'émission du signal UWB S_{UWB1} à une position de la balise mobile B_{M}. Un autre avantage est de pouvoir déterminer un mouvement de la balise mobile B_{M} en fonction de la fréquence d'émission de la première étiquette UWB ET₁. Par exemple, l'augmentation de la fréquence d'émission de la première étiquette UWB ET₁ peut être associée au rapprochement de la balise mobile B_{M} de ladite première étiquette UWB ET₁ et la diminution de la fréquence d'émission de la première étiquette UWB ET₁ peut être associée à l'éloignement de la balise mobile B_{M} de ladite première étiquette UWB ET₁.

Dans un mode de réalisation, le récepteur UWB REC_{UWB} de la balise mobile B_{M} comprend au moins une antenne de réception UWB. Chaque antenne de réception UWB peut être orientée suivant un angle prédéterminé par rapport à la direction suivant laquelle s'étend l'une quelconque des autres antennes de réception UWB. Un avantage est d'améliorer la réception des signaux UWB par le récepteur UWB REC_{UWB} de la balise mobile, notamment en augmentant la couverture spatiale de réception des antennes de réception UWB. Un autre avantage est de pouvoir déterminer plus précisément la position d'une étiquette UWB en fonction de l'angle d'arrivée du signal UWB émis par ladite étiquette UWB et reçu par au moins une antenne de réception du récepteur UWB de la balise mobile.

Dans un mode de réalisation, le récepteur UWB REC_{UWB} de la balise mobile B_{M} comprend une antenne réseau à commande de phase. Ce mode de réalisation est particulièrement avantageux pour obtenir une sélectivité spatiale sur les signaux radio par « formation de voies » ou « filtrage spatial ». Ces expressions sont mieux connues dans la littérature anglo-saxonne sous le nom de « beamforming ».

Selon un mode de réalisation, la balise mobile B_{M} comprend un calculateur. Le calculateur est configuré pour calculer, pour chaque antenne de réception du récepteur UWB REC_{UWB} de la balise mobile B_{M}, une puissance du premier signal UWB S_{UWB1} reçu. Un avantage est de pouvoir corréler la puissance reçue par chaque antenne avec l'angle d'arrivée du premier signal UWB S_{UWB1} reçu pour améliorer la localisation de l'étiquette UWB à l'origine de l'émission dudit premier signal UWB S_{UWB1}.

Dans un mode de réalisation, l'émission du premier signal UHF₁ par l'émetteur UHF EM_{UHF} de la balise mobile entraîne la réception du premier signal UWB S_{UWB1} par le récepteur UWB REC_{UWB} de la balise mobile B_{M}. Selon un exemple illustratif, le premier signal UHF S_{UHF1} émis est ensuite reçu par la première étiquette UWB ET₁ qui émet alors automatiquement, et de préférence de manière spontanée, le premier signal UWB S_{UWB1} en réponse à l'apport énergétique procuré par la réception du premier signal UHF S_{UHF1}. L'émission spontanée d'un signal UWB par l'étiquette UWB ET₁ est déclenchée dès lors qu'un niveau suffisant d'énergie radiofréquence est collectée. Le premier signal UWB S_{UWB1} émis par la première étiquette UWB ET₁ est ensuite reçu par le récepteur UWB REC_{UWB} de la balise mobile B_{M}.

### Première donnée d'étiquette D1

Le premier signal UWB S_{UWB1} comprend une première donnée d'étiquette D₁ La première donnée d'étiquette D₁ comprend en outre des informations propres à la première étiquette ET₁ à l'origine de l'émission du premier signal UWB S_{UWB1}. Les informations comprises par la première donnée D₁ comprennent par exemple la position de la première étiquette ET₁ ou encore des informations sur un objet sur lequel est apposée ladite première étiquette ET₁, par exemple un colis ou un bagage.

La première donnée d'étiquette D₁ reçue par la balise mobile B_{M} est enregistrée dans une mémoire MEM de la balise mobile B_{M}. La réception du premier signal UWB S_{UWB1} comprenant la première donnée d'étiquette D₁ est horodatée pour produire une première donnée d'horodatage H₁ associée à ladite première donnée D₁.

### Identification de la position de la balise mobile

En référence à la figure 2, l'invention vise à associer la position de la balise mobile B_{M} avec une première donnée D1 émise par une étiquette radio. L'association peut être réalisée de manière différée ou en temps réel selon le système mis en œuvre. Ainsi, il est possible de déduire la position de la première étiquette radio ET₁ à partir de la position calculée de la balise mobile qui a « vu » l'étiquette qu'on cherche in fine à localiser.

Pour parvenir à ce résultat, l'invention permet de mesurer ou de calculer la position de la balise mobile B_{M}. Différentes techniques de localisation peuvent être mises en œuvre. Ces différentes techniques de localisation peuvent impliquer que la balise mobile joue un rôle plus ou moins actif dans la production de données permettant de la localiser. Selon certains cas, la balise n'a pas connaissance de sa position mais émet des données permettant d'être localisée par un système tiers. Dans certains cas, la balise mobile B_{M} calcule ou reçoit sa position de manière à l'associer directement avec la première donnée D₁ émise par l'étiquette ET₁.

Dans la suite de la description, différents systèmes de localisation sont décrits selon différents modes de réalisation de l'invention.

### Association de la position de la balise mobile et de l'étiquette radio

Dans un mode de réalisation, la première donnée de position POS₁ est associée à la position d'au moins une étiquette UWB énergisée par le premier signal UHF S_{UHF1} énergisant. L'association peut être réalisée au sein de la mémoire MEM de la balise mobile B_{M}. Dans ce cas, les données associées peuvent être transmises en temps réel ou en différé par la balise à un système tiers. L'association peut également être réalisée au sein d'un équipement d'un réseau de données NET. Cette association a posteriori implique la transmission et le traitement de données permettant de reconstruire le contexte d'association entre la balise mobile B_{M} et la première étiquette UWB ET₁. Par exemple des données d'horodatages, de position ou d'autres données permettant de calculer a posteriori la position de l'étiquette UWB ET₁.

### Système de localisation

La position de la balise mobile B_{M} est déterminée au moyen d'un système de localisation L_{GEO}.

Selon un mode de réalisation, le système de localisation L_{GEO} comprend des moyens d'émission d'une première donnée de position POS₁ de la balise mobile B_{M} pouvant être exploitée par un système. L'exploitation peut comprendre la reconstruction d'une position, l'association d'une première donnée de position POS₁ de la balise mobile B_{M} avec une donnée de l'étiquette ou une réémission de ladite première donnée de position POS₁ vers la balise mobile B_{M} ou vers un serveur pour l'exploitation de cette donnée a posteriori.

Différentes techniques de localisation peuvent être mises en œuvre. Par exemple, le système de localisation L_{GEO} peut comprendre une étiquette de référence ET_{ref} de position connue ou un système de positionnement par satellites, aussi appelé GNSS (Géolocalisation et Navigation par un Système de Satellites). Selon divers exemples non limitatifs, le système GNSS comprend un système GPS, GLONASS, BEIDU ou Galileo.

Dans un mode de réalisation, le système GNSS est couplée à un système d'amélioration du positionnement. Selon divers exemples cités à titre non-limitatif, le système d'amélioration du positionnement comprend un système de type SBAS, ou encore un système GBAS. Selon un cas, un tel système exploite la connectivité de la balise mobile B_{M} (4G, Wi-Fi, LoRa,etc...)

D'autres techniques de localisation peuvent être mises en œuvre. Par exemple, le système de localisation L_{GEO} peut comprendre un système de géolocalisation par géocodeur, un système de géolocalisation par Wi-Fi, un système de géolocalisation par utilisation d'un opérateur de télécommunication, un système de localisation par odométrie ou encore un système de géolocalisation par RFID (Radio Frequency Identification). Selon différents exemples, le système de localisation par utilisation d'un opérateur de télécommunication comprend par exemple l'utilisation d'une technologie LoRa ou encore d'une technologie GSM (« Global System for Mobile communications »).

Dans un mode de réalisation, le système de localisation L_{GEO} comprend un « code à réponse rapide », mieux connu dans la littérature anglo-saxonne sous le nom de « quick response code » ou encore « QR code ». Ce code à réponse rapide est par exemple positionné dans l'environnement de détection à une position connue par le système. Selon différents exemples non-limitatifs, le code est positionné sur une paroi, au sol, au plafond, sur une caisse ou encore sur tout autre élément de position fixe dans l'environnement de détection.

Selon un cas, le système de localisation L_{GEO} comprenant ledit code à réponse rapide est scanné par un dispositif configuré pour décoder les informations comprises dans ledit code. Un tel dispositif est par exemple embarqué par un utilisateur ou embarqué par la balise mobile B_{M}. Dans ce cas, les informations scannées sont ensuite transmises vers l'équipement du réseau de données NET au moyen de l'interface de communication INT_{C}.

Avantageusement, un lien peut ensuite être établi entre les informations décodées et transmises et la position géographique du code connue par le système pour en déduire la position de l'utilisateur ou de la balise mobile B_{M} qui scanne ledit code.

Dans un mode de réalisation, le code à réponse rapide contient des données de localisation. Ces données comprennent par exemple des coordonnées terrestres correspondant à la position dudit code dans l'environnement de localisation. Dans ce cas, un utilisateur ou une balise mobile B_{M} embarquant un scanner pour décoder ledit code peut transmettre les données scannées vers un équipement du réseau de données NET, par exemple au moyen de l'interface de communication INT_{C}. Avantageusement, il n'est pas nécessaire de faire le lien entre les données transmises et une position connue du système en ce que les informations transmises comprennent déjà les données de position dudit code.

Selon différents modes de réalisation, le code à réponse rapide est scanné au moyen de différents capteurs tels que des capteurs comprenant des technologies laser, des capteurs optiques par exemple au moyen d'une caméra. Ces exemples ne sont pas limitatifs et tout type de technologies comprenant des moyens de décoder les données stockées dans un code à réponse rapide sont susceptibles d'être mises en œuvre dans le cadre de l'invention.

Dans un exemple, un système d'acquisition vidéo comprenant une caméra est mis en œuvre pour acquérir une image ou une séquence vidéo d'une zone de l'environnement de détection comprenant un système de localisation L_{GEO} comprenant un code à réponse rapide. Le système d'acquisition vidéo est par exemple embarqué par la balise mobile B_{M}, par un chariot mobile embarquant la balise mobile B_{M} ou par un utilisateur.

Ainsi, « l'angle de vue » de l'image ou la séquence vidéo acquis sur lesquels figurent un ou plusieurs codes à réponse rapide permet avantageusement de déterminer ou de confirmer une position de la balise mobile B_{M} ou de l'utilisateur, ou encore de déterminer une information d'orientation.

Selon un autre mode de réalisation, la balise mobile B_{M} comprend une caméra configurée pour détecter des longueurs d'ondes particulières, par exemple une caméra infrarouge. La caméra est par exemple embarquée sur une balise mobile B_{M} elle-même embarquée par un utilisateur. La caméra est par exemple positionnée sur le dessus de la balise mobile B_{M}. Selon un cas, la caméra capte des longueurs d'ondes particulières issues de sources positionnées dans des zones spécifiques. La balise mobile B_{M} équipée de la caméra peut alors reconnaître des « patterns » particuliers où des longueurs d'ondes particulières pour déterminer sa position. Dans un autre exemple, une image ou une séquence vidéo acquise par la caméra est exploitée et analysée au moyen d'un calculateur pour déterminer une position, une orientation ou un trajet de la balise mobile B_{M} en fonction du temps.

Toutefois, les éléments compris par le système de localisation L_{GEO} ne se limitent pas aux exemples précités, et peuvent comprendre tout type d'éléments aptes à contribuer à la localisation d'un objet dans l'espace ; ou bien même une combinaison de ces différents éléments, par exemple pour améliorer la précision de la localisation ou couvrir une zone plus importante qu'avec une unique technique de localisation.

### Localisation par un système UWB (Balises fixes)

Dans un mode de réalisation, la position de la balise mobile B_{M} est calculée par trilatération par une pluralité de balises. Ces balises sont également appelées « balises fixes » pour les différencier de la balise mobile B_{M}.

Chaque balise comprend des moyens de réception UWB configurés pour recevoir au moins un second signal UWB S_{UWB2} émis par la balise mobile B_{M}. Le second signal UWB S_{UWB2} comprend par exemple au moins une donnée d'identification de la balise mobile B_{M} encodée dans ledit second signal UWB S_{UWB2}. Cette configuration est particulièrement avantageuse pour repérer la balise mobile B_{M} dans un environnement intérieur, notamment lorsqu'une architecture de détection comprenant une pluralité de balises est mise en place et que la localisation par un autre système tel qu'un système GNSS n'est pas adaptée.

Selon l'invention, la balise mobile B_{M} est configurée pour émettre plusieurs fois les seconds signaux UWB S_{UWB2}. Les émissions successives permettent d'assurer une réception dudit second signal UWB S_{UWB2} par les balises fixes afin d'augmenter la probabilité de détection de la balise mobile. Selon un cas, les émissions de la balise mobile sont réalisées suivant une fréquence périodique. Ce cas peut être notamment mis en œuvre lorsque la balise mobile comporte une batterie lui permettant d'exploiter suffisamment d'énergie électrique pour générer des émissions successives. Avantageusement, les détections des second signaux UWB _{SUWB2} successifs par une pluralité de balises présentes dans l'environnement de détection sont améliorées, améliorant ainsi la précision de localisation de la balise mobile B_{M} dans l'environnement de détection.

Dans un autre mode de réalisation, un filtrage temporel est mis en œuvre sur les seconds signaux UWB S_{UWB2} émis successivement par la balise mobile B_{M}. Un avantage est de suréchantillonner la position calculée à partir desdits seconds signaux UWB S_{UWB2}, par exemple pour éliminer un bruit de localisation.

Selon un exemple de réalisation, la pluralité de balises est configurée pour calculer la position de la balise mobile B_{M} par trilatération pour produire la première donnée de position POS₁. La première donnée de position POS₁ peut ensuite être exploitée de différentes manières de sorte qu'elle soit associée à la première donnée d'étiquette D₁. L'association peut être faite :
- au niveau d'une balise fixe lorsque la première donnée d'étiquette D₁ est récupérée par cette dernière ;
- au niveau d'un équipement tiers tel qu'un serveur lorsque ce dernier reçoit par le système de localisation UWB la première donnée de position POS₁ et reçoit par un autre système de transmission de données la première donnée d'étiquette D₁.
- au niveau de la balise mobile B_{M} lorsque la position de la balise B_{M} calculée par trilatération est réémise vers la balise mobile B_{M}.

Dans un premier cas, l'association entre la première donnée d'étiquette D₁ et la première donnée de position POS₁ est réalisée au niveau d'une balise fixe. Dans ce premier cas, le second signal UWB S_{UWB2} est émis par la balise mobile B_{M} et comporte la première donnée d'étiquette D₁ et la première donnée d'horodatage H₁. Le second signal UWB S_{UWB2} est ensuite reçu par une balise fixe ou une pluralité de balises fixes. La position de la balise mobile B_{M} est calculée par trilatération par la pluralité de balises fixes pour produire la première donnée de position POS₁. La première donnée de position POS₁ est ensuite associée à la première donnée d'étiquette D₁ au sein d'une mémoire d'une des balises fixes.

Dans un second cas, l'association entre la première donnée d'étiquette D₁ et la première donnée de position POS₁ est réalisée au niveau d'un équipement tiers tel qu'un équipement d'un réseau de données NET. Dans ce cas, la première donnée de position POS₁ est calculée par trilatération par une pluralité de balises et la première donnée de position POS₁ est ensuite émise par la pluralité de balises vers l'équipement du réseau de données NET. La première information Sₜᵣₐₙₛ₁ comportant la première donnée d'étiquette D₁ ainsi que la première donnée d'horodatage H₁ est quant à elle émise par la balise mobile B_{M} vers l'équipement du réseau de données NET. Ainsi, l'association entre la première donnée de position POS₁ calculée par trilatération par la pluralité de balises fixes et la première donnée d'étiquette D₁ émise par la balise mobile B_{M} peut être réalisée à postériori au niveau de l'équipement du réseau de données NET.

Dans un troisième cas, l'association entre la première donnée de position POS₁ et la première donnée d'étiquette D₁ est réalisée au sein de la balise mobile B_{M}. Dans ce cas, la première donnée de position POS₁ peut être issue de différentes sources. La première donnée de position POS₁ peut être issue d'une étiquette de référence de position connue ET_{ref} et transmise au sein d'un signal UWB à la balise mobile B_{M} après que ladite étiquette de référence ET_{ref} ait été énergisée par l'émetteur UHF EM_{UHF} de la balise mobile B_{M}. Selon différents modes de réalisation, l'étiquette de référence ET_{ref} est alimentée par un dispositif de stockage d'énergie électrique tel qu'une batterie, par une alimentation AC/DC ou encore par une alimentation DC externe telle que par exemple une alimentation par Ethernet également désignée dans la littérature anglo-saxonne par l'acronyme « POE » pour « Power Over Ethernet ». Toutefois, les exemples précités sont donnés à titre indicatif et ne sont aucunement limitatifs. Plus généralement, tout type d'alimentation électrique est susceptible d'être mis en œuvre pour alimenter l'étiquette de référence ET_{ref}. Selon d'autres exemples, la première donnée de position POS₁ est issue d'un système de localisation GNSS ou encore d'une pluralité de balises fixes ayant calculé la position de la balise mobile par trilatération. D'une manière générale, dans ce troisième cas, la première donnée de position POS₁ peut être issue de n'importe lequel des systèmes de localisation L_{GEO} préalablement décrits. L'association entre la première donnée d'étiquette D₁ et la première donnée de position POS₁ est ensuite réalisée au sein de la mémoire MEM de la balise mobile B_{M}. La balise mobile B_{M} peut ensuite avantageusement transmettre la première information Sₜᵣₐₙₛ₁ comprenant la première donnée d'étiquette D₁ associée à ladite première donnée de position POS₁ vers un équipement d'un réseau de données NET.

### Localisation par un capteur situé sur la balise mobile

Dans un mode de réalisation, la première donnée de position POS₁ est déterminée à partir d'un ou plusieurs capteurs embarqués par la balise mobile B_{M}. Les capteurs embarqués par la balise mobile B_{M} peuvent comprendre par exemple une centrale à inertie ou encore un télémètre laser. Toutefois, les capteurs utilisés pour déterminer la position de la balise mobile B_{M} ne se limitent pas aux exemples précités et peuvent comprendre tout autre type de capteur ou encore une combinaison de plusieurs capteurs entre eux. Un avantage est d'obtenir une information sur la position de la balise mobile B_{M} lorsque l'utilisation d'autres systèmes de localisation n'est pas optimisée, par exemple lorsque la balise se trouve dans un environnement intérieur et que l'utilisation d'un système GNSS est inadaptée. Un autre avantage est de pouvoir combiner les informations issues des capteurs avec d'autres informations issues d'autres systèmes de localisation pour améliorer la précision de la localisation de la balise mobile B_{M}.

Dans un mode de réalisation, la première donnée de position POS₁ comporte une information issue d'au moins un capteur embarqué par la balise mobile B_{M} et une information issue d'un signal reçu par la balise mobile B_{M}. Le signal reçu peut par exemple comprendre le premier signal UWB S_{UWB1} issu de la première étiquette UWB ET₁ se trouvant à proximité de la balise mobile B_{M}. Selon un exemple, une association de l'information issue dudit au moins un capteur embarqué par la balise mobile B_{M} et du signal reçu par ladite balise mobile est réalisée au sein de la mémoire MEM de la balise mobile B_{M}. Avantageusement, la précision du calcul de la position de la balise mobile B_{M} est améliorée. Un autre avantage est de pouvoir ultérieurement utiliser la balise mobile B_{M} dont la position est connue précisément au sein d'une constellation de balises pour mettre en œuvre des calculs de positions par trilatération.

### Détection du signal UWB émis par la balise mobile

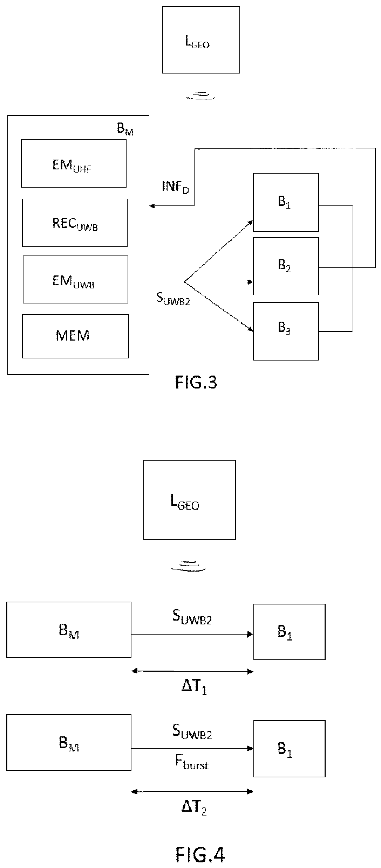

Selon l'invention, en référence à la figure 3, le second signal UWB S_{UWB2} émis par la balise mobile B_{M} est reçu par le système de localisation L_{GEO} comprenant la pluralité de balises. La pluralité de balises comprend des moyens de réception radio, des moyens pour décoder une information et des moyens pour horodater l'arrivée du signal UWB S_{UWB2}. La pluralité de balises est configurée pour transmettre une information de détection INF_{D} du second signal UWB S_{UWB2} à un équipement tiers ou à la balise mobile B_{M}. L'information de détection peut être un acquittement émis vers la balise mobile et/ou peut être une information relative à la qualité de la réception du signal reçu par une balise fixe et réémis vers la balise mobile B_{M} ou vers un équipement tiers.

Lorsque l'information de détection INF_{D} est émise vers la balise, elle peut comprendre en outre une information de réception, par la pluralité de balises, du signal UWB S_{UWB2} préalablement émis par la balise mobile B_{M}. Un avantage est de savoir si le signal émis par la balise mobile B_{M} est effectivement détecté par la pluralité de balises.

Dans un mode de réalisation, en référence à la figure 4, la balise mobile B_{M} est configurée pour émettre une pluralité de seconds signaux UWB à une fréquence augmentée F_{burst} en cas de non-réception de l'information de détection INF_{D}. L'émission de la pluralité de signaux UWB peut avoir lieu en cas de non-réception de l'information de détection INF_{D} au bout d'un premier intervalle de temps ΔT_{1.} L'émission de la pluralité de seconds signaux UWB peut avoir lieu pendant un second intervalle de temps ΔT_{2.} Les deux intervalles de temps ΔT₁ et ΔT₂ peuvent avoir été paramétrés en amont par un utilisateur par exemple au moyen d'une console de configuration permettant de paramétrer les variables d'émission de la balise. L'émission de la pluralité de signaux UWB à la fréquence augmentée F_{burst} peut également être issue d'une commande envoyée par un équipement d'un réseau de données NET. Un avantage est d'assurer la détection de la balise mobile B_{M} par une balise ou une constellation de balises lorsque le premier second signal UWB S_{UWB2} n'a pas été détecté en premier lieu.

Dans une variante, l'émission de la pluralité de seconds signaux UWB prend fin lorsque la balise mobile B_{M} reçoit l'information de détection INFo.

### Synchronisation des horloges des balises et calcul de position

L'invention permet de prendre en compte un signal de synchronisation généré par équipement de référence dont on connait la position relative vis-à-vis des balises de réception ou balises fixes. Ce dernier signal permet de synchroniser les différentes balises entre elles afin de minimiser les erreurs et de calculer de manière précise la position d'une balise mobile B_{M} et donc de l'étiquette radio dont on cherche à obtenir la position via la balise mobile B_{M}.

Différentes techniques de synchronisation peuvent être utilisées dans le cadre de l'invention. Selon un exemple, ce signal peut être émis depuis une étiquette radio de référence ET_{ref} dont la position est connue du système.

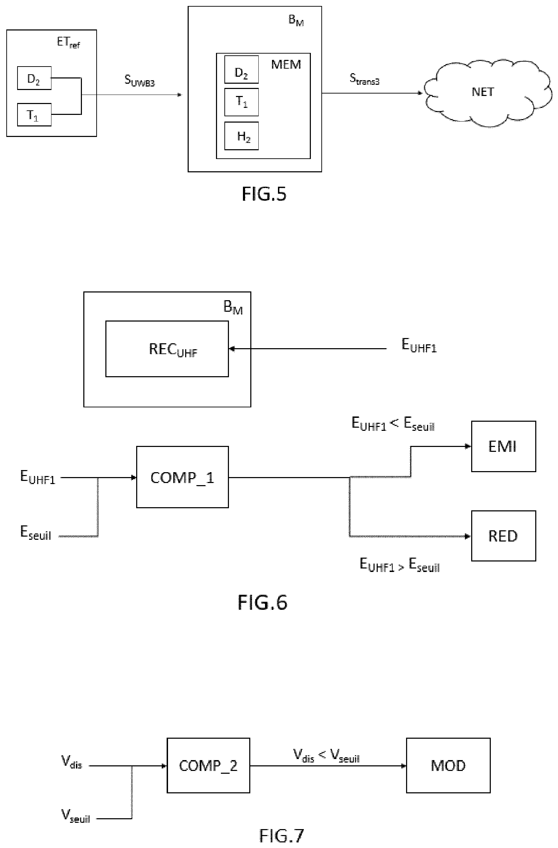

Selon un mode de réalisation, en référence à la figure 5, le procédé de l'invention comprend l'émission, par une étiquette de référence ET_{ref}, d'un troisième signal UWB S_{UWB3} comprenant une première information temporelle T₁ et une seconde donnée d'étiquette D₂. L'émission du troisième signal UWB S_{UWB3} est conditionnée par l'alimentation en énergie de ladite étiquette de référence ET_{ref} par une source d'énergie. Selon divers exemples, la source d'alimentation en énergie mise en œuvre pour alimenter l'étiquette de référence ET_{ref} comprend source UHF ou une source d'alimentation en énergie électrique telle qu'une batterie ou encore une source externe. La source externe est par exemple une alimentation AC/DC, une alimentation via câble Ethernet ou encore une alimentation via panneaux solaires. Dans une variante, la source d'alimentation en énergie de l'étiquette de référence ET_{ref} comprend une combinaison de plusieurs de ces technologies entre elles. Dans un exemple, la source d'énergie UHF est l'émetteur UHF EM_{UHF} de la balise mobile B_{M}. L'information temporelle T₁ comprend par exemple l'horodatage de l'émission du troisième signal UWB S_{UWB3}. La seconde donnée d'étiquette D₂ comprend par exemple une information sur la position de l'étiquette de référence ET_{ref} ou encore une information d'identification de ladite étiquette de référence ET_{ref}.

Selon un exemple de réalisation, le troisième signal UWB S_{UWB3} est reçu par la balise mobile B_{M} au moyen du récepteur UWB REC_{UWB}. La réception dudit troisième signal S_{UWB3} est ensuite horodatée pour produire une seconde donnée d'horodatage H₂ associée à la réception par la balise mobile B_{M} de la seconde donnée d'étiquette D₂ et de la première donnée d'horodatage D₁. Dans ce cas, la balise mobile B_{M} peut ensuite émettre une troisième information Sₜᵣₐₙₛ₃ comportant la première information temporelle T₁, la seconde donnée d'étiquette D₂ et la seconde donnée d'horodatage H₂ vers au moins un équipement d'un réseau de données NET. Un avantage est de pouvoir déduire, à partir de la première information temporelle T₁ et de la seconde donnée d'horodatage H₂, le temps de parcours du signal émis par l'étiquette de référence ET_{ref} vers la balise mobile B_{M}.

Les signaux de synchronisation peuvent être directement exploités par les balises ou être exploités a posteriori par un équipement tiers afin de reconstruire les positions de la balise mobile B_{M} et/ou de l'étiquette radio ET₁. Dans un mode de réalisation, la balise mobile B_{M} et une pluralité de balises radio UWB sont configurées pour émettre chacune une troisième information Sₜᵣₐₙₛ₃. Chaque troisième information Sₜᵣₐₙₛ₃ comporte la première information temporelle T₁ comprenant l'horodatage de l'émission du troisième signal UWB S_{UWB3} issu de l'étiquette de référence ET_{ref}. Chaque troisième information Sₜᵣₐₙₛ₃ comporte également la seconde donnée D₂ et une donnée d'horodatage, ladite donnée d'horodatage comprenant l'horodatage, pour chacune des balises, de la réception du troisième signal UWB S_{UWB3} issu de l'étiquette de référence ET_{ref}. Chaque troisième information Sₜᵣₐₙₛ₃ est par exemple émise vers un équipement d'un réseau de données NET. Une information temporelle de propagation du troisième signal UWB S_{UWB3} est ensuite déterminée pour chacune des balises. L'information temporelle de propagation peut être déterminée à partir de la donnée d'horodatage produite après réception du troisième signal UWB S_{UWB3} par l'une des balises et à partir de la première information temporelle T₁, par exemple par soustraction de l'heure d'émission du troisième signal UWB S_{UWB3} à l'heure de réception dudit troisième signal UWB S_{UWB3}. Dans cet exemple, l'information temporelle de propagation comprend alors le temps de parcours du troisième signal UWB S_{UWB3} depuis son émission par l'étiquette de référence ET_{ref} jusqu'à sa réception par l'une des balises ou par la balise mobile B_{M}. Ainsi, c'est tout le système de localisation qui peut être coordonné et synchronisé grâce à un signal de synchronisation émis pour chaque balise.

Dans un mode de réalisation, la balise mobile B_{M} et/ou l'une des balises comprend des moyens de calculs configurés pour déterminer l'information temporelle de propagation à partir de la donnée d'horodatage et de la première information temporelle T₁, ladite information temporelle de propagation comportant le temps de parcours du troisième signal UWB S_{UWB3} entre l'étiquette de référence ET_{ref} et la balise comportant lesdits moyens de calcul. Cela permet avantageusement de mettre en œuvre le calcul du temps de propagation du troisième signal UWB S_{UWB3} directement au sein des balises de sorte à pouvoir transmettre l'information temporelle de propagation via la troisième information Sₜᵣₐₙₛ₃ ultérieurement émise. Dans une variante, le calcul de l'information temporelle de propagation est mis en œuvre ultérieurement, après la réception de la troisième information Sₜᵣₐₙₛ₃ par un équipement d'un réseau de données NET.

Dans un mode de réalisation, le calcul de l'information temporelle de propagation est mis en œuvre pour chacune des balises. Le calcul de l'information temporelle de propagation peut également être mis en œuvre pour la balise mobile B_{M}. Chaque information temporelle de propagation comporte le temps de parcours du troisième signal UWB S_{UWB3} entre l'étiquette de référence ET_{ref} à l'origine de son émission et chacune des balises. Chaque information temporelle de propagation peut ensuite être comparée, par exemple au moyen d'un comparateur, pour déterminer les différents temps de parcours du troisième signal UWB S_{UWB3} entre l'étiquette de référence Et_{ref} à l'origine de son émission et chacune des balises. Avantageusement, cela permet de synchroniser les horloges des différentes balises entre elles pour permettre l'utilisation des balises dans la mise en œuvre de calculs ultérieurs, par exemple des calculs de la position d'un objet par trilatération.

### Trilatération avec la balise mobile

Dans un mode de réalisation, le calcul de la position d'au moins une étiquette radio UWB ET₁ est mis en œuvre par trilatération, ladite trilatération étant mise en œuvre au moyen de la balise mobile B_{M} et au moyen d'au moins deux balises. Dans ce mode de réalisation, la position de la balise mobile B_{M} a été préalablement déterminée de façon précise, par exemple au moyen du système de localisation S_{GEO}.

Un avantage est de pouvoir utiliser une balise mobile dans la mise en œuvre de calculs d'une position par trilatération, lorsque la position précise de la balise mobile B_{M} a été déterminée, par exemple au moyen du système de localisation S_{GEO}. Un autre avantage est d'améliorer la précision de localisation d'une infrastructure fixe de détection préexistante, en ajoutant une balise comportant une position spécifique à l'infrastructure de localisation.

Dans un mode de réalisation, au moins une balise mobile B_{M} de position connue est mise en œuvre dans un procédé de calcul d'une position d'au moins une seconde balise mobile B_{M}. La détermination de la position de la seconde balise mobile B_{M} permet avantageusement de pouvoir utiliser ladite seconde balise mobile B_{M} dans la mise en œuvre ultérieure de calculs de la position d'un objet par trilatération. Un autre avantage est de pouvoir suivre au cours du temps le déplacement d'une ou d'une pluralité de balises mobiles en mettant en œuvre des calculs de positions à intervalles de temps réguliers.

### Echange de données entre la balise mobile et le réseau de données

Selon un mode de réalisation, la balise mobile B_{M} comprend des moyens d'émission d'une première information Sₜᵣₐₙₛ₁. La première information Sₜᵣₐₙₛ₁ comprend la première donnée d'étiquette D₁ et la première donnée d'horodatage H₁ associée à ladite première donnée d'étiquette D₁. La première information Sₜᵣₐₙₛ₁ est émise vers un serveur de données par des moyens de communication non-filaires. Dans un exemple, les moyens de communication non-filaires comprennent une liaison Wi-Fi, 4G, 5G ou encore Bluetooth. Un avantage est de pouvoir stocker sur un serveur de données des informations liées à un objet ou un colis sur lequel est apposée l'étiquette ET₁ à l'origine de l'émission de la première donnée d'étiquette D₁.

Dans un exemple de réalisation, la première information Sₜᵣₐₙₛ₁ est envoyée en continu vers un équipement d'un réseau de données NET. Cela est rendu possible notamment lorsque la balise mobile B_{M} est connectée en permanence au réseau de données NET par l'intermédiaire des moyens de connexion non-filaires.

Dans un mode de réalisation, la balise mobile B_{M} est configurée pour recevoir des données depuis un équipement du réseau de données NET. Ce cas de figure est avantageux lorsqu'un utilisateur souhaite déterminer la position d'une étiquette radio ET₁ et qu'il souhaite accéder au système d'information gérant l'ensemble des positions des étiquettes depuis sa balise mobile. Ainsi, la balise mobile B_{M} peut agir comme un terminal d'accès aux données des étiquettes radio, par exemple au moyen d'une interface utilisateur connectée à ladite balise mobile B_{M}. Cela est rendu possible lorsque la balise mobile B_{M} est connectée à un équipement du réseau de données NET par les moyens de connexion non-filaires.

Selon un exemple de réalisation, la balise mobile B_{M} peut stocker les données reçues depuis l'équipement du réseau de données NET au sein de sa mémoire MEM. Les données reçues peuvent par exemple comprendre des données récentes stockées sur l'équipement du réseau de données NET par une autre balise mobile ou une balise fixe. Un avantage est d'établir une liaison bidirectionnelle entre la balise mobile B_{M} et l'équipement du réseau de données NET pour pouvoir recevoir des informations mises à jour sur plusieurs éléments du système, par exemple la position d'autres balises mobiles ou des informations sur les étiquettes UWB ayant été récemment énergisées.

### Cartographie UHF par la balise mobile

Dans un mode de réalisation, le procédé selon l'invention comprend la réception d'une première quantité d'énergie UHF E_{UHF1} par la balise mobile B_{M}. La réception de la première quantité d'énergie UHF E_{UHF1} est réalisée au moyen d'un récepteur UHF REC_{UHF} de la balise mobile B_{M}. La première quantité d'énergie UHF E_{UHF1} est ensuite comparée avec une valeur d'énergie seuil Eₛₑᵤᵢₗ. La valeur d'énergie seuil Eₛₑᵤᵢₗ est par exemple la valeur d'énergie à partir de laquelle on considère qu'une zone de l'environnement est suffisamment alimentée en énergie UHF et ne nécessite pas d'apport complémentaire en énergie UHF pour permettre une détection suffisante des étiquettes radio UWB présentes dans cette zone de l'environnement. Dans un exemple, la valeur d'énergie seuil est une valeur d'énergie seuil prédéterminée. La valeur d'énergie seuil prédéterminée est par exemple paramétrée par un utilisateur au moyen de l'interface utilisateur connectée à un dispositif électronique comprenant la balise mobile B_{M} ou appairé avec ladite balise mobile B_{M}. La comparaison entre la première quantité d'énergie UHF E_{UHF1} et la valeur d'énergie seuil Eₛₑᵤᵢₗ est par exemple réalisée au moyen d'un comparateur et permet de déterminer si la première quantité d'énergie UHF E_{UHF1} est inférieure ou supérieure à la valeur d'énergie seuil Eₛₑᵤᵢₗ. La comparaison de la première quantité d'énergie UHF E_{UHF1} avec la valeur d'énergie seuil Eₛₑᵤᵢₗ permet notamment de déterminer si une zone est suffisamment alimentée en énergie UHF par l'infrastructure ou si cette zone nécessite au contraire une alimentation UHF complémentaire pour permettre aux étiquettes présentes dans ladite zone d'émettre des trames UWB.

Dans un mode de réalisation, en référence à la figure 6, la balise mobile B_{M} est configurée pour émettre le premier signal UHF S_{UHF1} si la première quantité d'énergie UHF E_{UHF1} est inférieure à la valeur d'énergie seuil Eₛₑᵤᵢₗ et pour réduire l'énergie émise par l'émetteur UHF EM_{UHF} dans le cas où la première quantité d'énergie UHF E_{UHF1} reçue est supérieure à la valeur d'énergie seuil Eₛₑᵤᵢₗ. Cette configuration permet avantageusement de « cartographier » l'énergie UHF de plusieurs zones et, à posteriori, soit d'alimenter en énergie UHF une zone faiblement alimentée, soit au contraire de réduire l'émission de signaux UHF par la balise mobile B_{M} si la zone est déjà suffisamment alimentée. Dans un exemple, l'émission du premier signal UHF S_{UHF1} entraîne avantageusement l'émission spontanée de signaux UWB par des étiquettes présentes dans une zone initialement peu énergisée. Un autre avantage est de pouvoir détecter un changement d'état dans l'environnement de détection, par exemple la panne d'un émetteur ou un réagencement d'éléments dans l'environnement entrainant une augmentation ou une baisse de l'énergie UHF globale détectée. Un autre avantage est de pouvoir réduire la consommation électrique globale du système en réduisant la puissance UHF émise par les différentes balises de la zone si ladite zone est déjà suffisamment énergisée.

Dans un mode de réalisation, la balise mobile B_{M} est configurée pour émettre un signal comprenant une information de couverture UHF. L'information de couverture UHF peut comprendre par exemple une information sur la quantité d'énergie UHF reçue par la balise mobile B_{M}. Le signal comprenant l'information de couverture UHF peut être par exemple le second signal UWB S_{UWB2} si l'information de couverture UHF est envoyé vers un équipement comprenant un récepteur UWB, tel qu'une balise fixe ou une autre balise mobile. Le signal comprenant l'information de couverture UHF peut également être de nature différente, si l'information de couverture UHF est envoyée vers un autre équipement, tel qu'un équipement d'un réseau de données NET. Un avantage est de pouvoir recueillir des informations sur la quantité d'énergie UHF présente dans une zone de l'environnement, pour pouvoir à posteriori moduler l'énergie UHF émise par les différentes balises proches de la zone dans laquelle la balise mobile B_{M} réalise un diagnostic de couverture UHF, en fonction de la quantité d'énergie UHF présente dans ladite zone.

### Illumination en champ proche

Dans un mode de réalisation, en référence à la figure 7, le procédé selon l'invention comprend la mesure d'une valeur de distance V_{dis} entre un objet et la balise mobile B_{M} au moyen d'un capteur de distance. Le capteur de distance peut comprendre, par exemple, un capteur à ultrason, un capteur inductif, un capteur magnétique, un capteur optique ou encore un capteur capacitif. Le capteur de distance peut être par exemple un télémètre infrarouge. Toutefois, le capteur de distance utilisé ne se limite pas aux exemples précités et peut comprendre tout type de capteur permettant d'évaluer une distance entre ledit capteur et un objet, ou encore une combinaison de différents capteurs pour obtenir une valeur plus précise de la distance entre l'objet et la balise mobile B_{M}.

Dans un mode de réalisation, la valeur de distance V_{dis} mesurée au moyen du capteur est comparée avec une valeur de distance seuil Vₛₑᵤᵢₗ prédéterminée. La comparaison peut être réalisée au moyen d'un comparateur COMP.

Dans un exemple, l'émission du premier signal UHF S_{UHF1} énergisant est ensuite modulée en fonction du résultat de la comparaison entre la valeur de distance V_{dis} et la valeur de distance seuil prédéterminée Vₛₑᵤᵢₗ. La modulation du premier signal UHF S_{UHF1} peut par exemple comprendre l'augmentation de la puissance dudit premier signal UHF S_{UHF1} délivré lorsque la valeur de distance V_{dis} est supérieure à la valeur de distance seuil Vₛₑᵤᵢₗ prédéterminée. Cela permet avantageusement d'adapter le signal lorsque l'émetteur UHF EM_{UHF} de la balise mobile B_{M} se trouve à une position éloignée d'une étiquette UWB, pour assurer la détection dudit signal UHF S_{UHF1}. La modulation du premier signal UHF S_{UHF1} peut également comprendre la réduction de la puissance dudit premier signal UHF S_{UHF1} lorsque la valeur de distance V_{dis} est inférieure à la valeur de distance seuil prédéterminée. Cela permet avantageusement de réduire la consommation énergétique globale du système en réduisant la puissance du premier signal UHF S_{UHF1} émis lorsque l'émetteur UHF EM_{UHF} de la balise mobile B_{M} se trouve proche d'une étiquette radio UWB à énergiser.

Dans une variante, la modulation du premier signal UHF S_{UHF1} comprend l'augmentation de la puissance dudit premier signal UHF S_{UHF1} lorsque la valeur de distance V_{dis} de l'émetteur UHF à l'objet est inférieure à la valeur de distance seuil Vₛₑᵤᵢₗ. Cela permet avantageusement d'optimiser l'alimentation en énergie UHF d'une étiquette radio UWB lorsque l'émetteur UHF de la balise mobile B_{M} se trouve proche de ladite étiquette radio UWB à énergiser. Un autre avantage est de confirmer la présence d'une étiquette radio UWB sur l'objet à proximité de la balise mobile. En effet, une étiquette radio UWB est configurée pour émettre au moins un signal UWB en réponse à l'alimentation en énergie fournie par un signal UHF.

Dans une variante, la modulation du premier signal UHF S_{UHF1} comprend la réduction de la puissance dudit premier signal UHF S_{UHF1} lorsque la valeur de distance V_{dis} de l'émetteur UHF à l'objet est supérieure à la valeur de distance seuil Vₛₑᵤᵢₗ. Cela permet avantageusement d'économiser l'énergie de la source d'alimentation UHF lorsque les étiquettes radio UWB se trouvent à une distance trop importante pour être correctement énergisées.

Dans un mode de réalisation, la réception d'un signal UWB par le récepteur UWB REC_{UWB} de la balise mobile B_{M} entraîne l'augmentation de la puissance du premier signal UHF S_{UHF1} en réponse à ladite réception du signal UWB. Cette augmentation de puissance peut être par exemple mise en œuvre par un utilisateur au moyen d'une interface utilisateur. Dans ce cas, l'interface utilisateur comprend une commande de modulation du signal UHF émis par l'émetteur UHF EM_{UHF} de la balise mobile et des moyens pour informer l'utilisateur de la réception d'un signal UWB par la balise mobile B_{M}, par exemple des moyens d'alertes visuels ou sonores. Un avantage est de s'assurer que le signal UWB reçu par la balise mobile B_{M} provient d'une étiquette radio UWB se trouvant à proximité de la source UHF.

Dans un mode de réalisation, le premier signal UWB S_{UWB1} reçu par la balise mobile B_{M} est associé à une information temporelle de durée. L'information temporelle de durée comprend par exemple la durée pendant laquelle le premier signal UWB S_{UWB1} émis par la première étiquette UWB ET₁ a été reçu par la balise mobile B_{M}. L'information temporelle de durée peut également comprendre la première donnée d'horodatage H₁ de la réception dudit premier signal UWB S_{UWB1} par la balise mobile B_{M}. L'information temporelle de durée peut par exemple être stockée dans la mémoire MEM de la balise mobile B_{M}. Un avantage est d'associer une durée de réception à un signal UWB reçu par la balise mobile B_{M}, par exemple pour s'assurer que ledit signal UWB reçu provient bien d'une étiquette UWB se trouvant à proximité de la balise mobile.

Selon un mode de réalisation, l'information temporelle de durée associée au premier signal UWB S_{UWB1} est envoyée vers un équipement d'un réseau de données NET au moyen d'une liaison non filaire. La liaison non filaire peut comprendre des moyens d'émission WI-FI, 4G,5G, ou Bluetooth. Cette configuration est particulièrement avantageuse lorsqu'un même signal UWB est capté par une pluralité de balises mobiles. L'information temporelle de durée comprenant la durée de réception du premier signal UWB permet de déterminer quelle balise mobile B_{M} se trouve à proximité de l'étiquette radio UWB à l'origine de l'émission dudit premier signal UWB S_{UWB1}.

Dans une variante, l'information temporelle de durée associée au premier signal UWB S_{UWB1} peut être transmise vers un récepteur UWB d'une balise fixe ou d'une autre balise mobile au sein du second signal UWB S_{UWB2} émis par l'émetteur UWB EM_{UWB} de la balise mobile B_{M}.

Selon un exemple de réalisation, l'information temporelle de durée est associée à la valeur de distance V_{dis} de l'émetteur UHF à l'objet. Dans cet exemple, la première étiquette UWB ET₁ est apposée sur l'objet par rapport auquel la valeur de distance V_{dis} est mesurée. L'association peut se faire au sein de la mémoire MEM de la balise mobile ou au sein d'un équipement d'un réseau de données NET. Cette configuration est avantageuse dans le cas où un même signal UWB est capté par une pluralité de balises mobiles. Il est alors possible d'identifier plus précisément la balise mobile B_{M} se trouvant à proximité de l'étiquette radio UWB à l'origine de l'émission du premier signal UWB S_{UWB1} capté par une pluralité de balises mobiles B_{M}. Un autre avantage est de réduire l'incertitude sur la position de l'étiquette radio UWB à l'origine de l'émission du premier signal UWB S_{UWB1}.

### Information de contexte

Dans un mode de réalisation, le premier signal UWB S_{UWB1} reçu par la balise mobile B_{M} est associé à une information de contexte. L'information de contexte comporte en outre des informations sur le contexte dans lequel évolue la balise mobile B_{M} lorsqu'elle reçoit les signaux UWB d'une étiquette UWB énergisée. Cette information de contexte peut notamment comprendre des valeurs associées à des données physiques liées à l'environnement dans lequel évolue la balise mobile B_{M} ou des valeurs associées à des données physiques liées à la balise mobile B_{M} elle-même. L'information de contexte peut par exemple comprendre la valeur de distance V_{dis} à un obstacle ou encore la valeur de distance de la balise mobile B_{M} au sol, la première donnée de position POS₁, une information de mouvement de la balise mobile B_{M} ou encore l'information temporelle de durée. L'information temporelle de durée comprend par exemple la durée pendant laquelle le premier signal UWB S_{UWB1} émis par la première étiquette UWB ET₁ a été reçu par la balise mobile B_{M}. L'information temporelle de durée peut également comprendre la première donnée d'horodatage H₁ de la réception dudit premier signal UWB S_{UWB1} par la balise mobile B_{M}. Selon un autre cas, l'information temporelle de durée comprend la durée pendant laquelle l'environnement a été énergisé par l'émetteur UHF EM_{UHF} embarqué par la balise mobile B_{M}. Selon un autre exemple, l'information de contexte comprend un enregistrement sonore acquis par un capteur, ou encore une image ou une séquence vidéo acquise par une caméra positionnée sur la balise mobile B_{M}.

Dans un mode de réalisation, l'information de contexte comprend une information sur la directivité du signal UHF S_{UHF1} émis par l'émetteur UHF EM_{UHF} de la balise mobile B_{M}. Selon un exemple, l'information comprend une information de direction UHF privilégiée pour le signal UHF S_{UHF1}.

Dans un mode de réalisation, l'information de contexte comprend une information sur la durée séparant la mise en marche de la mise à l'arrêt de l'émission du premier signal énergisant S_{UHF1}. Selon un cas, l'information de contexte comprend également une information sur les antennes de la balise mobile B_{M} mises en jeu dans l'émission du signal énergisant S_{UHF1} et une information sur l'orientation desdites antennes dans l'espace.

Dans un mode de réalisation, l'information de durée comprend une information sur la durée d'énergisation d'une étiquette UWB par le premier signal énergisant S_{UHF1} couplée à une information de puissance émise par la source S_{UHF1}.

Selon un exemple, l'information de contexte comprend une information sur la présence d'autres balises mobiles B_{M} dans l'environnement de détection. Selon un autre exemple, l'information de contexte comprend des valeurs mesurées par différents capteurs installés sur la balise mobile B_{M} tels que des capteurs de position, des capteurs de mouvement, des capteurs de température ou encore des capteurs de pression. L'information de contexte peut être traitée par des moyens de traitement pour déterminer une donnée d'identification d'au moins une balise mobile ayant émis un premier signal UHF S_{UHF1} énergisant à l'origine de l'émission d'un premier signal UWB S_{UWB1} par une première étiquette radio UWB ET₁ et reçu par la balise mobile B_{M}. Un avantage est de pouvoir identifier précisément une balise mobile à l'origine de l'émission d'un signal UHF énergisant ayant énergisé une étiquette radio UWB, en fonction de différents paramètres physiques.

### Balise mobile

Selon un autre aspect, l'invention concerne une balise mobile B_{M} configurée pour mettre en œuvre le procédé de l'invention selon l'un quelconque des modes de réalisation préalablement décrits.

Dans un mode de réalisation, la balise mobile B_{M} comprend des moyens de stockage d'une quantité d'énergie électrique. Les moyens de stockage d'une quantité d'énergie électrique permettent notamment d'alimenter en énergie électrique l'émetteur UHF EM_{UHF} de la balise mobile, ou encore les différents capteurs installés sur la balise mobile B_{M}. Les moyens de stockage d'une quantité d'énergie électrique peuvent par exemple comprendre une batterie. La batterie peut être par exemple rechargée sur secteur. Les moyens de stockage d'énergie électrique peuvent comprendre n'importe quelle technologie de batterie parmi les technologies lithium-ion, Ni-Cad, Ni-Mh ou Pb/Sla. Toutefois, ce mode de réalisation de l'invention n'est pas limité aux technologies de batteries précitées. Dans un exemple de réalisation, la balise mobile peut comprendre une association d'une pluralité de technologies de batteries ou encore plusieurs batteries de technologies similaires.

Dans un mode de réalisation, la balise mobile B_{M} comprend une source photovoltaïque d'alimentation en énergie électrique. La source photovoltaïque d'alimentation en énergie électrique comprend par exemple un panneau solaire ou une pluralité de panneaux solaires.

La balise mobile B_{M} peut comprendre un indicateur du niveau de chargement des moyens de stockage d'énergie électrique. L'indicateur peut être un indicateur visuel tel qu'un voyant lumineux. Selon une variante, l'indicateur peut être un indicateur sonore tel qu'une alarme. La balise mobile B_{M} peut également comprendre une combinaison d'indicateurs visuels et/ou sonores. L'indicateur peut être configuré pour s'activer lorsque le niveau de chargement des moyens de stockage en énergie électrique descend en dessous d'un seuil de chargement prédéterminé. Cette configuration est particulièrement avantageuse dans le cas où les moyens de stockage d'énergie électrique nécessitent une alimentation sur secteur, pour avertir un utilisateur du besoin de recharger lesdits moyens de stockage en énergie électrique. Un autre avantage est de pouvoir avertir un utilisateur d'un risque de dysfonctionnement de la balise mobile B_{M} en cas de déchargement trop important desdits moyens de stockage en énergie électrique.

Dans un mode de réalisation, la balise mobile B_{M} comprend des capteurs embarqués. Les capteurs embarqués peuvent comprendre des capteurs de pression, des capteurs de distance, des capteurs de choc, des captures de vibration ou encore des capteurs de température. De manière générale, la balise mobile B_{M} peut comprendre tout type de capteurs permettant d'obtenir des informations sur des paramètres physiques de l'environnement dans laquelle ladite balise mobile B_{M} évolue, ou encore tout type de capteur permettant de mesurer des valeurs de paramètres physiques issus de l'interaction entre ladite balise mobile B_{M} et son environnement. Dans un exemple, les différents capteurs sont alimentés par une batterie de la balise mobile B_{M}.

Selon un mode de réalisation dans lequel la balise mobile B_{M} comprend une pluralité de capteurs, les données mesurées par les différents capteurs sont stockées au sein de la mémoire MEM de la balise mobile B_{M}. Selon un exemple de réalisation, les données mesurées sont horodatées et stockées dans la mémoire MEM de la balise mobile B_{M} sont ensuite envoyées vers un équipement d'un réseau de données NET. Cela est particulièrement avantageux pour recueillir des informations sur l'environnement dans lequel évolue la balise mobile B_{M} et sur les interactions éventuelles entre ladite balise mobile B_{M} et son environnement.

Dans un mode de réalisation, la balise mobile B_{M} comprend des moyens de contrôle. Les moyens de contrôle sont configurés pour contrôler l'émission du premier signal UHF S_{UHF1} émis par l'émetteur UHF EM_{UHF} de la balise mobile B_{M}. Les moyens de contrôle peuvent être contrôlés par un utilisateur. Le contrôle par un utilisateur est par exemple mis en œuvre au moyen d'une interface utilisateur d'un dispositif électronique comprenant la balise mobile B_{M} ou appairé avec ladite balise mobile B_{M}. Les moyens de contrôle peuvent permettre de moduler le premier signal UHF S_{UHF1} délivré par au moins une antenne d'émission de la balise mobile B_{M}. Les moyens de contrôle peuvent également permettre la mise à l'arrêt d'au moins une antenne d'émission de la balise mobile B_{M}. Les moyens de contrôle peuvent être autonomes. Par « autonomes », on entend que les moyens de contrôle peuvent être paramétrés en amont par un utilisateur pour contrôler automatiquement la modulation d'un signal UHF émis par une antenne d'émission ou commander la mise à l'arrêt d'une antenne d'émission. Ce contrôle automatique des antennes d'émission peut dépendre de la réception et du traitement d'une information issu d'un capteur tel qu'un capteur de mouvement, un capteur de position ou tout autre capteur embarqué par la balise mobile B_{M}.

Selon un exemple de réalisation, la balise mobile peut comprendre un ou une pluralité d'indicateurs de détection. Les indicateurs de détection peuvent être des indicateurs visuels et/ou sonores. Selon un exemple, les indicateurs de détection permettent d'informer un utilisateur de la détection d'un signal UWB par la balise mobile B_{M}. Les indicateurs de détection peuvent être par exemple des voyants lumineux ou des alarmes. Les indicateurs peuvent également être intégrés à une interface utilisateur comportant par exemple un écran et des moyens d'émission de son. Dans ce cas, les indicateurs visuels peuvent comprendre un message de détection apparaissant sur l'écran de l'interface utilisateur et les indicateurs sonores l'émission d'un son d'alerte par les moyens d'émission de son. Un avantage est d'avertir un utilisateur de la présence d'un émetteur UWB tel qu'une étiquette radio dans la zone où se trouve la balise mobile B_{M}. Selon un autre exemple, la réception d'un signal UHF par un récepteur UHF de la balise mobile B_{M} entraîne l'activation des indicateurs visuels et/ou sonores. Un avantage est d'avertir un utilisateur de la présence d'une autre source UHF dans la zone dans laquelle se trouve la balise mobile B_{M}.

La balise mobile B_{M} est configurée pour échanger des données avec au moins une autre balise mobile. L'échange de données peut se faire par l'émission d'un second signal UWB S_{UWN2} par la balise mobile B_{M} et la réception dudit second signal UWB S_{UWB2} par une autre balise mobile. Le second signal UWB₂ peut comprendre une partie ou la totalité des données stockées dans la mémoire interne de la balise mobile B_{M}. Un avantage est de permettre un échange de données entre plusieurs balises mobiles lorsque la couverture réseau ne permet pas de se connecter à un équipement du réseau de données NET, par exemple en l'absence de couverture WI-FI, 3G, 4G ou 5G.

Selon un mode de réalisation, la balise mobile B_{M} comprend une mémoire. La mémoire permet à la balise mobile B_{M} de stocker des informations décodées de signaux reçus, telles que des données d'identification d'un équipement ayant émis un signal reçu par la balise mobile B_{M}, par exemple la première donnée D₁, des données de position, par exemple la première donnée de position POS₁, des données d'horodatage (telles que l'horodatage des émissions et réception de signaux UWB), des données mesurées par des capteurs embarqués par la balise mobile B_{M}, ou encore l'information de contexte.

Les informations sont par exemple stockées dans la mémoire de la balise mobile B_{M} tant que celle-ci n'est pas connectée à un réseau de données, et sont par exemple transmise vers un équipement distant au moyen d'une liaison sans-fil dès lors que la connexion est rétablie. Ces informations transmises peuvent être exploitées à postériori sur un équipement distant ou sur un serveur de données ayant reçu les informations transmises par la balise mobile B_{M}, par exemple en mettant en œuvre des calculs au moyen d'un calculateur pour reconstruire une position ou un trajet de la balise mobile B_{M} sur un intervalle de temps donné.

### Chariot mobile embarquant une balise mobile

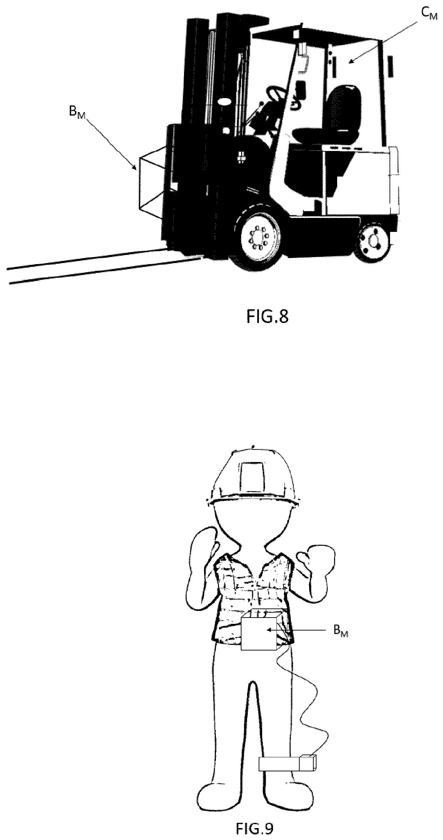

Selon un autre aspect, en référence à la figure 8, l'invention concerne un chariot mobile C_{M} embarquant la balise mobile B_{M} selon l'invention et plus généralement tout objet roulant susceptible de se déplacer et comportant une balise mobile.

La balise mobile B_{M} peut être rendue solidaire du chariot mobile C_{M} par des moyens de liaisons mécaniques. Les moyens de liaisons mécaniques peuvent comprendre des éléments de fixation tels que des vis, des écrous, des boulons où tout autre élément de fixation susceptible de rendre la balise mobile B_{M} solidaire dudit chariot mobile C_{M}. Dans une variante, le chariot mobile comprend au moins un rail et la balise mobile comprend des moyens de coopération avec ledit au moins un rail, la coopération mécanique dudit au moins un rail du chariot mobile C_{M} avec les moyens de coopération de la balise mobile B_{M} résultant en un assemblage mécanique solidarisant la balise mobile B_{M} audit chariot mobile C_{M}. Toutefois, les éléments compris par les moyens de liaison mécanique ne se limitent pas aux exemples précités, et tout élément mécanique permettant de solidariser la balise mobile B_{M} au chariot mobile C_{M} peuvent être compris par les moyens de liaison mécanique. Avantageusement, les risques de détérioration de la balise mobile B_{M} lors du déplacement du chariot mobile C_{M} sont ainsi réduits.

Dans un mode de réalisation, le chariot mobile C_{M} embarquant la balise mobile B_{M} est un appareil de levage et de manutention, tel qu'un chariot élévateur. Selon un autre exemple, le chariot mobile C_{M} est un transpalette manuel. Dans cet exemple l'appareil de levage et de manutention comprend un système de levage. Le système de levage peut comprendre une pluralité d'éléments tels qu'une poulie, un mât, un système hydraulique et des fourches. L'appareil de levage et de manutention peut comprendre un compartiment moteur contenant un moteur tel qu'un moteur électrique ou un moteur thermique. L'appareil de levage et de manutention peut comprendre une cabine destinée à l'accueil d'un utilisateur dudit appareil de levage et de manutention. La cabine peut comprendre un volant, un siège, et des moyens de commande du système de levage. Dans cet exemple de réalisation, la balise mobile B_{M} rendue solidaire de l'appareil de levage et de manutention permet avantageusement d'énergiser des étiquettes UWB apposées sur des objets tels que des colis déplacés par ledit appareil de levage et de manutention.

La balise mobile B_{M} peut être rendue solidaire du système de levage du chariot mobile C_{M} par les moyens de liaison mécaniques. Cela permet avantageusement de déplacer la balise mobile B_{M} par la mise en mouvement du système de levage. Cette configuration est particulièrement avantageuse notamment lorsque la balise mobile B_{M} comprend un émetteur UHF et qu'une étiquette UWB se trouve apposée sur un colis se trouvant en hauteur. Le déplacement du système de levage permet alors de rapprocher la source UHF de l'étiquette UWB à alimenter, pour entraîner l'émission d'un signal UWB par ladite étiquette UWB. Cette configuration est particulièrement avantageuse dans le cas d'un chargement sur la partie mobile du chariot élévateur d'un objet se trouvant en hauteur. En effet, le fait que la balise mobile B_{M} soit rendue solidaire de la partie mobile du chariot permet de détecter l'objet que l'utilisateur est en train de charger et il n'est donc pas nécessaire d'attendre que la partie mobile soit revenue à sa position initiale pour détecter l'objet chargé.

Selon un exemple de réalisation, la balise mobile B_{M} et/ou le chariot mobile comprend un capteur de distance. Le capteur de distance est configuré pour calculer une distance entre le sol et la partie mobile dudit chariot mobile C_{M}. Le capteur de distance peut être un capteur ultrason ou un télémètre laser. Toutefois, le type de capteur utilisé ne se limite pas aux exemples précités et peut comprendre tout type de capteur de distance ou une combinaison de plusieurs capteurs de distance. Un avantage est de déterminer à quelle distance du sol se trouve la partie mobile du chariot élévateur au moment du chargement ou du déchargement d'un objet comprenant une étiquette UWB.

Dans un mode de réalisation, le chariot mobile C_{M} comprend une batterie. La batterie peut être une batterie destinée à alimenter à la fois le chariot mobile C_{M} et la balise mobile B_{M} en énergie électrique. Selon une variante, la batterie est destinée uniquement à alimenter le chariot mobile en énergie électrique. Le chariot mobile peut également comprendre des indicateurs sonores et/ou visuels. Les indicateurs sonores et/ou visuels sont destinés à avertir un utilisateur du franchissement d'un niveau prédéterminé de chargement de ladite batterie. Cela est particulièrement avantageux pour avertir un utilisateur du besoin de recharger ladite batterie pour éviter un dysfonctionnement du système.

Dans un exemple de réalisation dans lequel la batterie alimente à la fois le chariot mobile C_{M} et la balise mobile B_{M}, le franchissement du niveau prédéterminé de chargement de la batterie entraîne l'interruption de l'alimentation de la balise mobile B_{M} par la ladite batterie. Cela permet avantageusement d'économiser l'énergie électrique restante dans la batterie, par exemple pour permettre à un utilisateur d'utiliser l'énergie restante pour se rapprocher d'un point de chargement tel qu'une prise secteur.

Dans un mode de réalisation, le chariot mobile C_{M} embarquant la balise mobile B_{M} peut comprendre un socle de chargement. Le socle de chargement peut comprendre au moins un connecteur électrique. Le au moins un connecteur électrique est configuré pour se connecter électriquement à la batterie de la balise mobile B_{M}. La connexion électrique entre le socle de chargement et la balise mobile peut se faire par exemple par l'intermédiaire d'une prise mâle et d'une prise femelle. Selon un exemple de réalisation, le socle de chargement peut avantageusement être positionné au niveau de la partie basse du chariot mobile C_{M}, au niveau du système de levage. Dans cet exemple, le connecteur du socle est configuré pour se connecter à la batterie de la balise mobile B_{M} par l'intermédiaire du au moins un connecteur électrique lorsque le système de levage du chariot mobile se trouve en position basse et que la balise mobile est rendue solidaire dudit système de levage du chariot mobile C_{M}. Un avantage est de pouvoir recharger la batterie de la balise mobile B_{M} lorsque le système de levage du chariot mobile n'est pas exploité pour le chargement ou le déchargement d'un objet. Un autre avantage est de s'affranchir de l'utilisation de câbles électriques connectés à la batterie de la balise mobile B_{M}.Dans une variante, le socle de chargement comprend un chargeur à induction. Le chargeur à induction comprend par exemple une surface plane comprenant une bobine de cuivre. Toutefois, tout type de technologie permettant de recharger la balise mobile B_{M} par induction est susceptible d'être mis en œuvre dans le cadre de l'invention. Selon un exemple, la balise mobile B_{M} comprend un récepteur compatible avec le chargeur à induction.

Selon un mode de réalisation, la balise mobile B_{M} et/ou le chariot mobile C_{M} comprend des moyens d'émission de lumière. Les moyens d'émission de lumière peuvent par exemple comprendre une lampe, un phare ou tout autre élément alimenté électriquement configuré pour émettre un signal lumineux. Les moyens d'émission de lumière peuvent par exemple être alimentés par la batterie du chariot mobile C_{M} ou de la balise mobile B_{M}. Un avantage est de pouvoir éclairer l'environnement lors du déplacement du chariot mobile C_{M} embarquant la balise mobile B_{M} ou lors du chargement d'un objet par ledit chariot mobile C_{M}.

Dans un mode de réalisation, la balise mobile B_{M} et/ou le chariot mobile C_{M} comprennent des moyens d'enregistrement vidéo. Les moyens d'enregistrement vidéo peuvent par exemple comprendre une caméra. Les moyens d'enregistrement vidéo peuvent par exemple être alimentés par la batterie de la balise mobile B_{M} ou du chariot mobile C_{M}. Un avantage est de pouvoir associer une image ou une séquence vidéo à l'horodatage de la réception d'un signal UWB par la balise mobile B_{M}. Les images et/ou les séquences vidéo acquises peuvent par exemple être enregistrées dans la mémoire MEM de la balise mobile B_{M}. Cela permet avantageusement d'améliorer l'identification des étiquettes à l'origine de l'émission des signaux UWB captés par la balise mobile B_{M}, par l'obtention d'un visuel desdites étiquettes.

Selon un mode de réalisation, le chariot mobile comprend un écran. L'écran est par exemple localisé dans la cabine d'un utilisateur. Dans un exemple de réalisation, l'écran est connecté aux moyens d'enregistrement vidéo. Un avantage est de permettre à un utilisateur de suivre en direct l'acquisition de séquences vidéo par les moyens d'enregistrement vidéo. Un autre avantage est de pouvoir détecter en direct une défaillance éventuelle desdits moyens d'enregistrement vidéo ou encore une anomalie lors du chargement d'un objet sur le chariot mobile C_{M}. Dans un mode de réalisation, le chariot mobile C_{M} embarquant la balise mobile B_{M} comprend une interface utilisateur. L'interface utilisateur comprend par exemple une tablette numérique comprenant une mémoire interne. Dans un exemple de réalisation, la tablette numérique comprend des moyens de connexion non filaires pour se connecter à un équipement du réseau de données. Les moyens de connexion non filaires comprennent par exemple une liaison WI-FI, 3G, 4G, 5G ou Bluetooth. La tablette numérique est connectée à la balise mobile par une liaison filaire ou non filaire. Un avantage est de permettre à la balise mobile de transmettre une partie des informations contenues dans sa mémoire MEM à la tablette. Un autre avantage est de permettre à un utilisateur de visualiser directement sur la tablette numérique les informations contenues dans la mémoire de la balise mobile B_{M}. Les données contenues dans la mémoire interne de la tablette numérique peuvent être envoyées vers un équipement du réseau de données NET par l'intermédiaire des moyens de connexion non-filaires. Dans un exemple de réalisation, la liaison entre l'interface utilisateur et l'équipement du réseau de données NET est bidirectionnelle. Un avantage est de pouvoir récupérer les informations récemment stockées sur l'équipement du réseau de données NET par au moins un autre équipement connecté, par exemple une autre balise mobile B_{M}.

Selon un mode de réalisation, l'écran du chariot mobile C_{M} est configuré pour afficher des informations contextuelles. Il s'agit par exemple de données mesurées par des capteurs, telles que des données de température, des données de distance séparant la balise mobile B_{M} ou le chariot mobile C_{M} d'un objet présent dans l'environnement. Les informations contextuelles affichées par l'écran peuvent également comprendre des informations d'identification d'un utilisateur. Par exemple, l'écran peut comprendre une interface à travers laquelle un utilisateur s'identifie au moyen d'un mot de passe. Ces informations peuvent ensuite être enregistrées dans une mémoire et éventuellement transmise vers un équipement tiers ou un réseau de données par l'intermédiaire d'une liaison sans fil. Les informations contextuelles peuvent également comprendre une donnée relative au temps d'occupation du chariot mobile C_{M} par un utilisateur, ou encore une information sur un état des équipements (défaillance d'un capteur détectée, taux de charge d'une batterie).

Les informations contextuelles peuvent également comprendre l'information de contexte associée au premier signal S_{UWB1}. Les informations contextuelles peuvent également comprendre des informations d'identification d'un objet transporté par le chariot mobile B_{M}, ou d'identification d'un destinataire de l'objet transporté sur le chariot mobile B_{M}. Il s'agit par exemple d'informations sur la nature d'un objet transporté au sein d'un carton sur lequel est apposé une étiquette radio UWB, ou encore une information d'identification d'un client à qui est destiné l'objet transporté par le chariot mobile C_{M}. Dans un exemple, l'interface utilisateur affiche plusieurs informations contextuelles sur l'écran et affiche une interface à travers laquelle l'utilisateur peut confirmer ou non la conformité des informations affichées. Les informations contextuelles et la validation de leur conformité peut ensuite être transmise par l'intermédiaire d'une liaison sans fil et au moyen d'une interface de communication, via un signal encodant ces données. L'ensemble de ces informations peut également être stocké au sein d'une mémoire pour être transmise à posteriori, ou encore pour être lues par un autre utilisateur.

Selon un mode de réalisation, la balise mobile est associée à plusieurs équipements comprenant des écrans. Il s'agit par exemple d'un équipement fixe situé dans le chariot mobile, et d'un équipement mobile tel qu'une tablette mobile ou une montre connectée. Les deux écrans sont par exemple tous deux configurés pour afficher les informations contextuelles. Ainsi, avantageusement, si l'écran dans la cabine affiche une information nécessitant une vérification, comme un problème de chargement, l'utilisateur peut sortir du chariot mobile et vérifier la conformité ou non des informations en ayant accès à l'affichage des informations contextuelles lorsqu'il se trouve en dehors du chariot mobile. Un équipement comprenant un écran et associé à la balise mobile peut également être configuré pour émettre des messages radios, tels que des signaux UWB, par exemple pour permettre de localiser un utilisateur, ou encore pour permettre de corréler la position de l'utilisateur avec celle de la balise mobile B_{M} ou du chariot mobile C_{M}. Selon un exemple, un équipement comprenant un écran est configuré pour mettre en œuvre des moyens de communication et/ou de localisation, par exemple via wifi, Bluetooth, 4G ou GNSS, pour détecter et s'associer avec une balise mobile B_{M} ou un chariot mobile C_{M} présent à proximité. Selon un autre exemple, un équipement comprenant un écran et associé à la balise mobile B_{M} ou au chariot mobile C_{M} est configuré pour émettre une alerte lorsqu'il détecte une erreur de connexion avec la balise mobile B_{M} ou avec le chariot mobile C_{M}. Il peut par exemple s'agir d'un cas dans lequel l'équipement est associé avec une autre balise mobile B_{M} ou un autre chariot mobile C_{M} que celui avec lequel il a été configuré pour s'associer. L'alerte peut comprendre une alerte sonore, l'affichage d'un message d'erreur, ou encore une vibration.

Selon un mode de réalisation, la balise mobile B_{M} et/ou le chariot mobile C_{M} est configuré pour s'associer avec un ou plusieurs équipements comprenant un écran comprenant l'interface utilisateur.

Selon un mode de réalisation, la balise mobile B_{M} et/ou le chariot mobile C_{M} est configuré pour s'associer avec un équipement comprenant un écran et comprenant des capteurs. Les capteurs comprennent par exemple des capteurs de mouvement, une boussole, ou encore une caméra. L'équipement comprenant un écran peut également comprendre un système de localisation intégré. Dans ce cas, les informations contextuelles comprennent par exemple à la fois des données reçues depuis des capteurs positionnés sur la balise mobile B_{M} et/ou sur le chariot mobile C_{M} et des données reçues depuis des capteurs positionnés sur l'équipement comprenant un écran et comprenant des capteurs.

Dans un mode de réalisation, la balise mobile B_{M} embarquée par le chariot mobile C_{M} comprend des moyens de détection de chocs. Les moyens de détection de chocs peuvent par exemple comprendre un capteur de choc ou un capteur de vibrations. Les moyens de détection de chocs sont configurés pour détecter une vibration ou un choc lors du déplacement du chariot mobile C_{M} ou de la partie mobile dudit chariot mobile C_{M}. Dans un exemple de réalisation, la détection d'une vibration ou d'un choc entraîne la transmission d'un signal de détection depuis les moyens de détection de chocs vers la mémoire MEM de la balise mobile. Le signal de détection comprend une information sur un choc ou une vibration captée par les moyens de détection de chocs. La transmission du signal de détection peut être « automatisée ». Par « automatisée », on entend que la transmission du signal de détection peut être réalisée automatiquement vers la mémoire de la balise mobile B_{M}, par exemple lorsqu'un certain seuil de choc ou de vibration est atteint.

Dans un exemple de réalisation, le signal de détection est associé à la première donnée d'étiquette ET₁. Un avantage est de détecter si un objet sur lequel est apposée une étiquette UWB a reçu un choc lors du chargement, du déchargement ou du transport dudit objet. Dans une variante, la détection d'un choc ou d'une vibration par les moyens de détection de chocs entraînent l'activation d'un indicateur visuel et/ou sonore. L'indicateur peut par exemple se déclencher lorsque le choc ou les vibrations mesurés dépassent une valeur seuil prédéterminée. Dans un exemple, la valeur seuil prédéterminée est paramétrée par un utilisateur au moyen de l'interface utilisateur. Un avantage est de produire une information et de la transmettre directement à un utilisateur si le chariot mobile C_{M} et/ou la balise mobile B_{M} embarquée a potentiellement été endommagée par le choc ou les vibrations. L'utilisateur peut également avantageusement être informé d'un risque de perte de calibration de la balise mobile B_{M} consécutivement au choc subi.

### Balise mobile embarquée par un utilisateur

Selon un autre aspect illustré en figure 9, l'invention concerne un élément embarqué par un utilisateur comportant une balise mobile BM selon l'invention. Par « élément embarqué par un utilisateur », on entend que la position de l'élément « embarqué » suit la position de l'utilisateur embarquant ledit élément lorsque ledit utilisateur se déplace. Ainsi, selon divers exemples, l'élément embarqué comprend un élément à sangles tel qu'un harnais, un élément comprenant des bretelles comme un sac à dos un élément comportant une poignée comme une valise, un scanner à main ou encore un élément sanglé sur un membre corporel d'un utilisateur tel que son bras. Plus généralement, tout type d'élément pouvant être embarqué, déplacé ou transporté par un utilisateur est susceptible d'être mis en œuvre dans le cadre de l'invention. Dans une variante, la balise mobile B_{M} est embarquée par un utilisateur dans un vêtement tel qu'un gilet comprenant des compartiments pour accueillir ladite balise mobile B_{M}.

Selon un mode de réalisation, la balise mobile B_{M} est embarquée par un utilisateur par des moyens d'attache de ladite balise mobile B_{M} au corps ou à un vêtement de l'utilisateur. Les moyens d'attache peuvent par exemple comprendre une fermeture auto-agrippante, ou tout autre élément permettant de rendre ladite balise mobile B_{M} solidaire d'une partie corporelle ou d'un vêtement d'un utilisateur.

Dans un mode de réalisation, l'élément embarqué comprend au moins un capteur. Selon divers exemples, le capteur comprend un capteur de pression ou encore un capteur de mouvement. Plus généralement, tout type de capteur permettant de mesurer un paramètre physique en lien avec l'utilisateur, avec l'environnement dans lequel l'utilisateur évolue ou encore en lien avec les interactions dudit utilisateur avec son environnement est susceptible d'être mis en œuvre dans le cadre de l'invention. Un avantage est de pouvoir déterminer une information physique pour définir le contexte, par exemple une information de type odométrique pour en déduire que la balise mobile B_{M} est en mouvement.

Dans un mode de réalisation, l'élément embarqué comprend au moins un dispositif de lecture. Selon un cas, le dispositif de lecture est configuré pour décoder au moins une information provenant d'un autre dispositif. Selon un exemple, le dispositif de lecture est configuré pour scanner une information stockée dans un code à réponse rapide, également désigné dans la littérature anglo-saxonne par le terme « Quick Response Code » ou encore « QR code ». Selon un autre exemple, le dispositif de lecture comprend un lecteur d'identification par radio fréquence, également désigné dans la littérature anglo-saxonne par les termes « radio frequency identification » ou « RFID ».

Selon un mode de réalisation, le dispositif de lecture est déporté sur une partie du corps d'un utilisateur. Selon un exemple, le dispositif de lecture est déporté sur les membres inférieur d'un utilisateur. Selon différents cas, le dispositif de lecture comprend des moyens de connexion filaires ou des moyens de connexion non-filaires. Un avantage est de pouvoir lire facilement des informations stockées préalablement dans l'environnement. Un autre avantage est de pouvoir localiser plus précisément une balise mobile B_{M}.

Selon un autre aspect, l'invention concerne un système comprenant une balise mobile et au moins une étiquette radio UWB.

Selon un mode de réalisation, le système comprend une pluralité d'étiquettes UWB, la balise mobile B_{M} selon l'invention, et le système de localisation L_{GEO}. Les éléments du système peuvent interagir entre eux pour mettre en œuvre n'importe lequel des modes de réalisation du procédé selon l'invention.

Dans un exemple de réalisation, le système comprend également un chariot mobile C_{M} embarquant la balise mobile B_{M} ou tout objet roulant susceptible de se déplacer et comportant une balise mobile. Selon un autre exemple, le système comprend un élément embarqué par un utilisateur et la balise mobile B_{M} selon l'invention.

Dans tous les cas, la balise mobile B_{M} comprise par le système est configurée pour mettre en œuvre n'importe lequel des modes de réalisation du procédé selon l'invention.

## Revendications

1. Procédé pour transmettre une information d'au moins une première étiquette radio UWB (ET₁) au moyen d'une balise mobile (B_{M}) comportant des moyens d'émission et de réception et comprenant les étapes suivantes:
▪ Emission d'un premier signal énergisant par un émetteur de la balise mobile (B_{M}) ;
▪ Réception par la balise mobile (B_{M}), au moyen d'un récepteur UWB (REC_{UWB}), d'un premier signal UWB (S_{UWB1}) émis par la première étiquette radio UWB (ET₁) énergisée par ledit premier signal énergisant, ledit premier signal UWB (S_{UWB1}) comprenant une première donnée d'étiquette (D₁);
▪ Horodatage de ladite réception du premier signal UWB (S_{UWB1}) pour produire une première donnée d'horodatage (H₁) associée à la première donnée (D₁) ;
▪ Décodage de la première donnée d'étiquette (D₁) et enregistrement de la première donnée d'étiquette (D₁) décodée dans une mémoire (MEM) de la balise mobile (B_{M}) ;
▪ Association (ASSO_DATA) d'une première donnée de position (POS₁) de la balise mobile (B_{M}) à ladite première donnée d'étiquette (D₁), ladite donnée de position (POS₁) permettant de localiser la balise mobile (B_{M}), ladite première donnée de position (POS₁) étant déterminée au moyen d'un système de localisation (L_{GEO}) ;
▪ Emission (EM_INF) d'une première information (Stᵣₐₙₛ₁) par la balise mobile (B_{M}) comportant ladite première donnée d'étiquette (D₁) et la première donnée d'horodatage (H₁) et émission d'une seconde information (Sₜᵣₐₙₛ₂) par la balise mobile (B_{M}) comportant la première donnée de position (POS₁) vers au moins un équipement d'un réseau de données (NET), **caractérisé en ce qu'**il comprend :
▪ Emission d'une pluralité de seconds signaux UWB (S_{UWB2}) par la balise mobile (B_{M}) au moyen d'un émetteur UWB (EM_{UWB}), chaque second signal UWB (S_{UWB2}) comportant au moins une donnée encodée d'identification de ladite balise mobile (B_{M});
▪ Réception de la pluralité de second signaux UWB (S_{UWB2}) par le système de localisation (L_{GEO}) comportant une pluralité de balises radio UWB, ledit système de localisation (L_{GEO}) comportant des moyens de réception radio et des moyens pour décoder les données d'identification et pour horodater l'arrivée des seconds signal UWB (S_{UWB2}) ;
▪ Transmission à la balise mobile (B_{M}) par le système de localisation (L_{GEO}), d'une information de détection (INF_{D}) du second signal UWB (S_{UWB2})
▪ Calcul, au moyen de la pluralité de seconds signaux reçus par chacune des balises radio, de la première donnée de position (POS₁) de la balise mobile (B_{M}).

2. Procédé selon la revendication 1, dans lequel la première information (Stᵣₐₙₛ₁) est émise vers un serveur de données par une liaison Wifi, 4G, 5G ou Bluetooth et la seconde information (Sₜᵣₐₙₛ₂) est émise sous la forme d'un message UWB vers un système de localisation comportant au moins une balise fixe comportant des moyens de réception de signaux UWB pour calculer par trilatération la position de la balise mobile (B_{M}), ladite association entre la première donnée de position (POS₁) de la balise mobile (B_{M}) à ladite première donnée d'étiquette (D₁) étant réalisée par le serveur de données de sorte à permettre de localiser ladite balise mobile (B_{M}).

3. Procédé selon la revendication 2, comprenant :
▪ Emission d'un second signal UWB (S_{UWB2}) par la balise mobile (B_{M}) au moyen d'un émetteur UWB (EM_{UWB}), ledit second signal UWB (S_{UWB2}) comportant au moins une donnée encodée d'identification de ladite balise mobile (B_{M}), ladite émission entrainant l'activation d'une horloge pour mesurer un premier intervalle de temps (ΔT₁),
▪ Emission d'une pluralité de second signaux UWB (S_{UWB2}) à une fréquence augmentée (F_{burst}) pendant un second intervalle de temps (ΔT₂) en cas de non-réception d'une information de détection (INF_{D}) au terme d'un premier intervalle de temps (ΔT₁), ladite information de détection (INF_{D}) indiquant la détection du second signal UWB (S_{UWB2}) par un système de réception UWB.

4. Procédé selon l'une quelconque des revendications 1 à 3, dans lequel la balise mobile (B_{M}) reçoit la première donnée de position (POS₁) émise par :
▪ Une étiquette de référence (ET_{ref}) de position connue ;
▪ Un système de géolocalisation par satellite ;
▪ Un système de géolocalisation par géocodeur ;
▪ Un système de géolocalisation par Wi-Fi ;
▪ Un système de géolocalisation par utilisation d'un opérateur de télécommunication,
▪ Un système de géolocalisation par RFID.

5. Procédé selon l'une quelconque des revendications 1 à 4, dans lequel la première information (Stᵣₐₙₛ₁) et la seconde information (Sₜᵣₐₙₛ₂) sont émises vers un serveur de données par une interface de communication sans fil, et dans lequel l'association entre la première donnée de position (POS₁) et la première donnée d'étiquette (D₁) est réalisée au sein de la balise mobile (B_{M}), ladite première donnée de position (POS₁) étant émise vers la balise mobile (B_{M}) par le système de localisation (L_{GEO}).

6. Procédé selon l'une quelconque des revendications 1 à 5, comprenant
▪ Réception, par la balise mobile (B_{M}) et au moyen d'un récepteur UWB, d'un troisième signal UWB (S_{UWB3}) émis par au moins une étiquette radio UWB de référence (ET_{ref}) de position connue, ledit troisième signal UWB (S_{UWB3}) comprenant une première information temporelle (T₁) encodée d'horodatage de l'émission dudit troisième signal UWB (S_{UWB3}) et comprenant une seconde donnée (D₂) encodée d'identification de l'étiquette radio UWB de référence (ET_{ref}) au moyen d'un récepteur UWB (REC_{UWB}) ;
▪ Horodatage de ladite réception du troisième signal UWB (S_{UWB3}) pour produire une seconde donnée d'horodatage (H₂) de la réception de l'information temporelle (T₁) et de la seconde donnée (D₂) ;
▪ Enregistrement de la première information temporelle (T₁) décodée et de la seconde donnée (D₂) d'identification décodée dans une mémoire de la balise mobile (B_{M}),
▪ Emission, par la balise mobile (B_{M}), d'une troisième information (Sₜᵣₐₙₛ₃) comportant la première information temporelle (T₁), la seconde donnée (D₂) et la seconde donnée d'horodatage (H₂) vers au moins un équipement du réseau de données (NET).

7. Procédé selon la revendication 6, comprenant :
▪ Emission, par la balise mobile (B_{M}) et par une pluralité de balises radio UWB, d'une pluralité de troisièmes informations (Sₜᵣₐₙₛ₃) au moyen d'une interface de communication et vers au moins un équipement du réseau de données (NET) ;
▪ Calcul, pour la balise mobile (B_{M}) et pour chaque balise radio UWB et au moyen d'un calculateur, d'une information temporelle de propagation de chaque troisième signal UWB (S_{UWB3}), chaque information temporelle de propagation étant calculée à partir de chaque première information temporelle (T₁) et de chaque seconde donnée d'horodatage (H₂) ;
▪ Comparaison, par un comparateur (COMP), des informations temporelles de propagation de chaque troisième signal UWB (S_{UWB3})
▪ Synchronisation d'une horloge de la balise mobile (B_{M}) et d'une horloge de chaque balise radio UWB entre elles en fonction du résultat des comparaisons des informations temporelles de propagation.

8. Procédé selon l'une quelconque des revendications 1 à 7, comprenant la mise en œuvre, au moyen d'un calculateur, d'au moins un calcul par trilatération d'une position relative de la première étiquette radio UWB (ET₁), à partir du premier signal UWB (S_{UWB1}) émis par ladite première étiquette radio UWB (ET₁) et reçu par la balise mobile (B_{M}) et par au moins deux autres balises radio UWB.

9. Procédé selon l'une quelconque des revendications 1 à 8, comprenant :
▪ Réception d'une première quantité d'énergie UHF (E_{UHF1}) par la balise mobile (B_{M}) au moyen d'un récepteur UHF (REC_{UHF});
▪ Comparaison (COMP_1) de la première quantité d'énergie UHF (E_{UHF1}) reçue avec une valeur d'énergie seuil prédéterminée au moyen d'un comparateur (COMP) ;
▪ Emission (EMI) du premier signal énergisant au moyen de l'émetteur de la balise mobile (B_{M}) si la première quantité d'énergie UHF (E_{UHF1}) reçue est inférieure à la valeur d'énergie seuil (Eₛₑᵤᵢₗ) prédéterminée ;
▪ Réduction (RED) de l'énergie émise par l'émetteur de la balise mobile (B_{M}) si la première quantité d'énergie UHF (E_{UHF1}) reçue est supérieure à la valeur d'énergie seuil (Eₛₑᵤᵢₗ) prédéterminée.

10. Procédé selon l'une quelconque des revendications 1 à 9, comprenant :
▪ Mesure d'une valeur de distance (V_{dis}) entre un objet et la balise mobile (B_{M}) au moyen d'un capteur de distance ;
▪ Comparaison (COMP_2), au moyen d'un comparateur, de la valeur de distance mesurée (V_{dis}) avec une valeur de distance seuil (Vₛₑᵤᵢₗ) prédéterminée ;
▪ Modulation (MOD) de l'émission du premier signal énergisant par l'émetteur UHF (EM_{UHF}) de la balise mobile (B_{M}) si la valeur de distance mesurée (V_{dis}) est inférieure à la valeur de distance seuil (Vₛₑᵤiₗ) prédéterminée.

11. Procédé selon l'une quelconque des revendications 1 à 10, dans lequel le premier signal UWB (S_{UWB1}) reçu par la balise mobile (B_{M}) est associé à une information de contexte correspondant à une information sur l'environnement dans lequel évolue la balise mobile (B_{M}), et dans lequel la première information (Stᵣₐₙₛ₁) émise vers l'équipement d'un réseau de données (NET) comprend l'information de contexte, l'information de contexte étant traitée par des moyens de traitement pour déterminer une donnée d'identification de la balise mobile (B_{M}) ayant émis le premier signal énergisant à l'origine de l'émission par la première étiquette radio UWB (ET₁) dudit premier signal UWB (S_{UWB1}) reçu par ladite balise mobile (B_{M}).

12. Balise mobile comprenant des moyens d'émission d'un signal énergisant, des moyens de réception de signaux UWB, un calculateur et une mémoire, **caractérisée en ce qu'**elle est configurée pour mettre en œuvre le procédé de l'une quelconque des revendications 1 à 11.

13. Balise mobile selon la revendication 12, comprenant au moins deux antennes d'émission (ANT_{EM}), chaque antenne d'émission (ANT_{EM}) étant configurée pour émettre au moins une portion du premier signal énergisant.

14. Chariot mobile (C_{M}) comportant une balise mobile (B_{M}) selon l'une quelconque des revendications 12 à 13.

15. Elément embarqué par un utilisateur comportant une balise mobile (B_{M}) selon l'une quelconque des revendications 12 à 13.

16. Système comportant une balise mobile selon l'une quelconque des revendications 12 à 13 et comportant au moins une première étiquette radio UWB (ET₁) configurée pour émettre le premier signal UWB (S_{UWB1}).

## Patentansprüche

1. Verfahren zum Übertragen einer Information von mindestens einem ersten UWB-Tag (ET₁) mittels einer Sende- und Empfangsmittel umfassenden, mobilen Bake (B_{M}), folgende Schritte umfassend:
▪ Senden eines ersten Energiesignals durch einen Sender der mobilen Bake (B_{M});
▪ Empfangen eines ersten UWB-Signals (S_{UWB1)} durch die mobile Bake (B_{M}) mittels eines UWB-Empfängers (REC_{UWB}), wobei das erste UWB-Signal (S_{UWB1)} von dem ersten UWB-Tag (ET₁) gesendet wird, der von dem ersten Energiesignal bestromt wird, und wobei das erste UWB-Signal (S_{UWB1}) einen ersten Tag-Datensatz (D₁) umfasst;
▪ Zeitstempeln des Empfangs des ersten UWB-Signals (S_{UWB1)}), um einen ersten Zeitstempel-Datensatz (H₁) zu erzeugen, der mit dem ersten Datensatz (D₁) verknüpft ist;
▪ Decodieren des ersten Tag-Datensatzes (D₁) und Speichern des ersten decodierten Tag-Datensatzes (D₁) in einem Speicher (MEM) der mobilen Bake (B_{M});
▪ Verknüpfen (ASSO_DATA) eines ersten Positions-Datensatzes (POS₁) der mobilen Bake (B_{M}) mit dem ersten Tag-Datensatz (D₁), wobei der Positions-Datensatz (POS₁) die Lokalisierung der mobilen Bake (B_{M}) ermöglicht, wobei der erste Positions-Datensatz (POS₁) mittels eines Lokalisierungssystems (L_{GEO}) bestimmt wird;
▪ Senden (EM_INF) einer ersten den ersten Tag-Datensatz (D₁) und den ersten Zeitstempel-Datensatz (H₁) umfassenden Information (Sₜᵣₐₙₛ₁) durch die mobile Bake (B_{M}) sowie Senden einer zweiten den ersten Positions-Datensatz (POS₁) umfassenden Information (Sₜᵣₐₙₛ₂) durch die mobile Bake (B_{M}) an mindestens eine Ausrüstung eines Datennetzwerks (NET), **dadurch gekennzeichnet, dass** sie umfasst:
▪ Senden mehrerer zweiter UWB-Signale (S_{UWB2}) durch die mobile Bake (B_{M}) mittels eines UWB-Senders (EM _{UWB)}, wobei jedes zweite UWB-Signal (S_{UWB2}) mindestens einen codierten Datensatz zur Identifizierung der mobilen Bake (B_{M}) umfasst;
▪ Empfangen der mehreren zweiten UWB-Signale (S_{UWB2}) durch das Lokalisierungssystem (L_{GEO)}, das mehrere UWB-Funkbaken umfasst, wobei das Lokalisierungssystem (L_{GEO}) Funkempfangsmittel und Mittel zum Decodieren der Identifikationsdaten und zum Zeitstempeln des Eintreffens der zweiten UWB-Signale (S_{UWB2}) umfasst;
▪ Übertragung einer Erkennungsinformation (INF_{D}) des zweiten UWB-Signals (S_{UWB2}) durch das Lokalisierungssystem (L_{GEO}) an die mobile Bake (B_{M})
▪ Berechnung des ersten Positions-Datensatzes (POS₁) der mobilen Bake (B_{M}) anhand der mehreren zweiten Signale, die von jeder der Funkbaken empfangen werden.

2. Verfahren nach Anspruch 1, wobei die erste Information (Sₜᵣₐₙₛ₁) über eine WLAN-, 4G-, 5G- oder Bluetooth-Verbindung an einen Datenserver gesendet wird und die zweite Information (Sₜᵣₐₙₛ₂) in Form einer UWB-Nachricht an ein Lokalisierungssystem gesendet wird, das mindestens eine feste Bake mit UWB-Signalempfangsmitteln umfasst, um die Position der mobilen Bake (B_{M}) durch Trilateration zu berechnen, wobei die Verbindung zwischen dem ersten Positions-Datensatz (POS₁) der mobilen Bake (B_{M}) und dem ersten Tag-Datensatz (D₁) vom Datenserver so hergestellt wird, dass es möglich ist, die mobile Bake (B_{M}) zu lokalisieren.

3. Verfahren nach Anspruch 2, umfassend:
▪ Senden eines zweiten UWB-Signals (S_{UWB2}) durch die mobile Bake (B_{M}) mittels eines UWB-Senders (EM _{UWB}), wobei das zweite UWB-Signal (S_{UWB2}) mindestens einen codierten Datensatz zur Identifizierung der mobilen Bake (B_{M}) umfasst, wobei das Senden die Aktivierung einer Uhr zur Messung eines ersten Zeitintervalls (ΔT₁) bewirkt,
▪ Senden mehrerer zweiter UWB-Signale (S_{UWB2}) mit erhöhter Frequenz (F_{Burst}) während eines zweiten Zeitintervalls (ΔT₂) bei Nichtempfang einer Erkennungsinformation (INF_{D}) nach Ablauf eines ersten Zeitintervalls (ΔT₁), wobei die Erkennungsinformation (INFo) die Erkennung des zweiten UWB-Signals (S_{UWB2}) durch ein UWB-Empfangssystem angibt.

4. Verfahren nach einem der Ansprüche 1 bis 3, wobei die mobile Bake (B_{M}) den ersten Positions-Datensatz (POS₁) empfängt, der gesendet wird von:
▪ Einem Referenz-Tag (ET_{ref}) mit bekannter Position;
▪ Einem Geolokalisierungssystem per Satellit;
▪ Einem Geolokalisierungssystem per Geocodierung;
▪ Ein Geolokalisierungssystem per WLAN;
▪ Einem Geolokalisierungssystem per Einsatz eines Telekommunikationsanbieters,
▪ Einem Geolokalisierungssystem per RFID.

5. Verfahren nach einem der Ansprüche 1 bis 4, wobei die erste Information (Sₜᵣₐₙₛ₁) und die zweite Information (Sₜᵣₐₙₛ₂) über eine drahtlose Kommunikationsschnittstelle an einen Datenserver gesendet werden, und wobei die Verknüpfung zwischen dem ersten Positions-Datensatz (POS₁) und dem ersten Tag-Datensatz (D₁) innerhalb der mobilen Bake (B_{M}) erfolgt, wobei der erste Positions-Datensatz (POS₁) vom Lokalisierungssystem (L_{GEO}) an die mobile Bake (B_{M}) gesendet wird.

6. Verfahren nach einem der Ansprüche 1 bis 5, umfassend:
▪ Empfangen eines dritten UWB-Signals (S_{UWB3}) durch die mobile Bake (B_{M}) mittels eines UWB-Empfängers, wobei das dritte UWB-Signal (S_{UWB3}) von mindestens einem Referenz-UWB-Tag (ET_{ref}) mit bekannter Position gesendet wird und das dritte UWB-Signal (S_{UWB3}) eine erste zeitlich codierte Information (T₁) zur Zeitstempelung der Übertragung des dritten UWB-Signals (S_{UWB3}) sowie einen zweiten codierten Datensatz (D₂) zur Identifizierung des Referenz-UWB-Tags (ET_{Ref}) mittels eines UWB-Empfängers (REC _{UWB}) umfasst;
▪ Zeitstempeln des Empfangs des dritten UWB-Signals (S_{UWB3}), um einen zweiten Zeitstempel-Datensatz (H₂) des Empfangs der Zeitinformation (T₁) und des zweiten Datensatzes (D₂) zu erzeugen;
▪ Speichern der ersten decodierten Zeitinformation (T₁) und des zweiten decodierten Identifikations-Datensatzes (D₂) in einem Speicher der mobilen Bake (B_{M}),
▪ Senden einer dritten Information (Sₜᵣₐₙₛ₃) umfassend die erste Zeitinformation (T₁), den zweiten Datensatz (D₂) und den zweiten Zeitstempel-Datensatz (H₂) durch die mobile Bake (B_{M}) an mindestens eine Ausrüstung des Datennetzwerks (NET).

7. Verfahren nach Anspruch 6, umfassend:
▪ Senden mehrerer dritter Informationen (Sₜᵣₐₙₛ₃) durch die mobile Bake (B_{M}) und durch mehrere UWB-Funkbaken mittels einer Kommunikationsschnittstelle an mindestens eine Ausrüstung des Datennetzwerks (NET);
▪ Berechnen einer Ausbreitungs-Zeitinformation jedes dritten UWB-Signals (S_{UWB3}) mittels eines Rechners für die mobile Bake (B_{M}) und für jede UWB-Funkbake, wobei jede Ausbreitungs-Zeitinformation aus jeder ersten Zeitinformation (T₁) und jedem zweiten Zeitstempel-Datensatz (H₂) berechnet wird;
▪ Vergleichen der Ausbreitungs-Zeitinformationen jedes dritten UWB-Signals (S_{UWB3}) mit einer Messuhr (COMP)
▪ Synchronisieren einer Uhr der mobilen Bake (B_{M}) und einer Uhr jeder UWB-Funkbake untereinander in Abhängigkeit vom Ergebnis der Vergleiche der Ausbreitungs-Zeitinformationen.

8. Verfahren nach einem der Ansprüche 1 bis 7, umfassend mindestens eine Trilaterationsberechnung einer relativen Position des ersten UWB-Tags (ET₁) mittels eines Rechners, ausgehend vom ersten UWB-Signal (S_{UWB1}), das von dem ersten UWB-Tag (ET₁) gesendet und von der mobilen Bake (B_{M}) und von mindestens zwei anderen UWB-Funkbaken empfangen wird.

9. Verfahren nach einem der Ansprüche 1 bis 8, umfassend:
▪ Empfangen einer ersten Menge an UHF-Energie (E_{UHF1}) durch die mobile Bake (B_{M}) mittels eines UHF-Empfängers (REC _{UHF});
▪ Vergleichen (COMP_1) der ersten empfangenen **UHF-**Energiemenge (E_{UHF1}) mit einem vorbestimmten Energieschwellenwert mittels einer Messuhr (COMP);
▪ Senden (EMI) des ersten Energiesignals mittels des Senders der mobilen Bake (B_{M}), wenn die erste empfangene Menge an **UHF-**Energie (E_{UHF1}) kleiner ist als der vorbestimmte Energieschwellenwert (E_{Schwellenwert});
▪ Reduzieren (RED) der vom Sender der mobilen Bake (B_{M}) ausgesendeten Energie, wenn die erste empfangene Menge an UHF-Energie (E_{UHF1}) über dem vorbestimmten Energieschwellenwert (E_{Schwellenwert}) liegt.

10. Verfahren nach einem der Ansprüche 1 bis 9, umfassend:
▪ Messen eines Abstandswerts (V_{dis}) zwischen einem Objekt und der mobilen Bake (B_{M}) mittels eines Abstandssensors;
▪ Vergleichen (COMP_2) des gemessenen Abstandswerts (V_{dis}) mit einem vorgegebenen Schwellenabstandswert (V_{Schwellenwert}) mittels einer Messuhr;
▪ Modulieren (MOD) der Ausgabe des ersten Energiesignals durch den UHF-Sender (EM _{UHF}) der mobilen Bake (B_{M}), wenn der gemessene Abstandswert (V_{dis}) kleiner ist als der vorbestimmte Schwellenabstandswert (V_{Schwellenwert}).

11. Verfahren nach einem der Ansprüche 1 bis 10, wobei das erste von der mobilen Bake (B_{M}) empfangene UWB-Signal (S_{UWB1}) einer Kontextinformation zugeordnet wird, die einer Information über die Umgebung entspricht, in der sich die mobile Bake (B_{M}) bewegt, und wobei die erste an die Ausrüstung eines Datennetzwerks (NET) gesendete Information (Sₜᵣₐₙₛ₁) die Kontextinformation umfasst, wobei die Kontextinformation mit Verarbeitungsmitteln verarbeitet wird, um eine Identifikationsinformation der mobilen Bake (B_{M}) zu bestimmen, die das erste Energiesignal gesendet hat, das die Übertragung des ersten von der mobilen Bake (B_{M}) empfangenen UWB-Signals (S_{UWB1}) durch das erste UWB-Tag (ET₁) verursacht hat.

12. Mobile Bake, umfassend Mittel zum Senden eines Energiesignals, Mittel zum Empfangen von UWB-Signalen, einen Rechner und einen Speicher, **dadurch gekennzeichnet, dass** sie so konfiguriert ist, dass sie das Verfahren nach einem der Ansprüche 1 bis 11 umsetzt.

13. Mobile Bake nach Anspruch 12, umfassend mindestens zwei Sendeantennen (ANT_{EM}), wobei jede Sendeantenne (ANT_{EM}) so konfiguriert ist, dass sie mindestens einen Teil des ersten Energiesignals sendet.

14. Mobiler Wagen (C_{M}) mit einer mobilen Bake (B_{M}) nach einem der Ansprüche 12 bis 13.

15. Von einem Benutzer an Bord mitgeführtes Element mit einer mobilen Bake (B_{M}) nach einem der Ansprüche 12 bis 13.

16. System mit einer mobilen Bake nach einem der Ansprüche 12 bis 13 und mit mindestens einem ersten UWB-Tag (ET₁), das so konfiguriert ist, dass es das erste UWB-Signal (S_{UWB1}) sendet.

## Claims

1. A method for transmitting a piece of information from at least one first UWB radio tag (ET₁) by means of a mobile beacon (B_{M}) including transmission and reception means comprising the following steps:
▪ Transmitting a first energizing signal by a transmitter of the mobile beacon (BM);
▪ Receiving, by the mobile beacon (B_{M}), by means of a UWB receiver (REC_{UWB}), a first UWB signal (S_{UWB1}) transmitted by the first UWB radio tag (ET₁) energized by said first energizing signal, said first UWB signal (S_{UWB1}) comprising a first tag piece of data (D₁);
▪ Time stamping said reception of the first UWB signal (S_{UWB1}) to produce a first timestamping piece of data (H₁) associated with the first piece of data (D₁);
▪ Decoding the first tag piece of data (D₁) and recording the first tag piece of data (D₁) decoded in a memory (MEM) of the mobile beacon (B_{M});
▪ Associating (ASSO_DATA) a first position piece of data (POS₁) of the mobile beacon (B_{M}) with said first tag piece of data (D₁), said position piece of data (POS₁) enabling the mobile beacon (B_{M}) to be located, said first position piece of data (POS₁) being determined by means of a location system (L_{GEO});
▪ Transmitting (EM_INF) a first piece of information (Sₜᵣₐₙₛ₁) by the mobile beacon (B_{M}) comprising said first tag piece of data (D₁) and the first timestamping piece of data (H₁) and transmitting a second piece of information (Sₜᵣₐₙₛ₂) by the mobile beacon (B_{M}) including the first position piece of data (POS₁) to at least one piece of equipment of a data network (NET), **characterized in that** it comprises :
▪ Transmitting a plurality of second UWB signals (S_{UWB2}) by the mobile beacon (B_{M}) by means of a UWB transmitter (EM_{UWB}), each second UWB signal (S_{UWB2}) comprising at least one encoded piece of data of identifying said mobile beacon (B_{M});
▪ Receiving the plurality of second UWB signals (S_{UWB2}) by the location system (L_{GEO}) comprising a plurality of UWB radio beacons, said location system (L_{GEO}) comprising radio reception means and means for decoding the identification piece of data and for timestamping arrival of the second UWB signal (S_{UWB2});
▪ Transmitting to the mobile beacon (B_{M}) by the location system (L_{GEO}), a piece of information (INF_{D}) of detecting the second UWB signal (S_{UWB2})
▪ Calculating, by means of the plurality of second signals received by each of the radio beacons, the first position piece of data (POS₁) of the mobile beacon (B_{M}).

2. The method according to claim 1, wherein the first piece of information (Sₜᵣₐₙₛ₁) is transmitted to a data server via a Wifi, 4G, 5G or Bluetooth link and the second piece of information (Sₜᵣₐₙₛ₂) is transmitted in the form of a UWB message to a location system comprising at least one fixed beacon comprising means for receiving UWB signals to calculate by trilateration the position of the mobile beacon (B_{M}), said association between the first position piece of data (POS₁) of the mobile beacon (B_{M}) and said first tag piece of data (D₁) being performed by the data server so as to allow locating said mobile beacon (B_{M}).

3. The method according to claim 2, comprising:
▪ Transmitting a second UWB signal (S_{UWB2}) by the mobile beacon (B_{M}) by means of a UWB transmitter (EM_{UWB}), said second UWB signal (S_{UWB2}) comprising at least one encoded piece of data of identifying said mobile beacon (B_{M}), said transmitting causing activation of a clock to measure a first time interval (ΔT₁),
▪ Transmitting a plurality of second UWB signals (S_{UWB2}) at an increased frequency (F_{burst}) for a second time interval (ΔT₂) in case of non-reception of a detection piece of information (INF_{D}) at the end of a first time interval (ΔT₁), said detection piece of information (INF_{D}) indicating detection of the second UWB signal (S_{UWB2}) by a UWB reception system.

4. The method according to any of claims 1 to 3, wherein the mobile beacon (B_{M}) receives the first position piece of data (POS₁) transmitted by:
▪ A reference tag (ET_{ref}) having known position;
▪ A satellite geolocation system;
▪ A geolocation system by geocoder;
▪ A Wi-Fi geolocation system;
▪ A geolocation system by use of a telecommunications operator,
▪ An RFID geolocation system.

5. The method according to any one of claims 1 to 4, wherein the first piece of information (Sₜᵣₐₙₛ₁) and the second piece of information (Sₜᵣₐₙₛ₂) are transmitted to a data server by a wireless communication interface, and wherein the association between the first position piece of data (POS₁) and the first tag piece of data (D₁) is made within the mobile beacon (B_{M}), said first position piece of data (POS₁) being transmitted to the mobile beacon (B_{M}) by the location system (L_{GEO}).

6. The method according to any of claims 1 to 5, comprising:
▪ Receiving, by the mobile beacon (B_{M}) and by means of a UWB receiver, a third UWB signal (S_{UWB3}) transmitted by at least one reference UWB radio tag (ETref) having known position, said third UWB signal (S_{UWB3}) comprising a first time piece of information (T₁) encoded of timestamping transmission of said third UWB signal (S_{UWB3}) and comprising a second encoded piece of data (D₂) of identifying the reference UWB radio tag (ET_{ref}) using a UWB receiver (REC_{UWB});
▪ Timestamping said reception of the third UWB signal (S_{UWB3}) to produce a second time stamping piece of data (H₂) of the reception of the time piece of information (T₁) and the second piece of data (D₂);
▪ Recording the first decoded time piece of information (T₁) and the second decoded identification piece of data (D₂) in a memory of the mobile beacon (B_{M}),
▪ Transmitting, by the mobile beacon (BM), a third piece of information (Sₜᵣₐₙₛ₃) comprising the first time piece of information (T₁), the second piece of data (D₂) and the second timestamping data (H₂) to at least one piece of equipment of the data network (NET).

7. The method according to claim 6, comprising:
▪ Transmitting, by the mobile beacon (B_{M}) and by a plurality of UWB radio beacons, a plurality of third pieces of information (Sₜᵣₐₙₛ₃) by means of a communication interface and to at least one piece of equipment of the data network (NET);
▪ Calculating, for the mobile beacon (B_{M}) and for each UWB radio beacon and by means of a calculator, a time piece of information of propagating every third UWB signal (S_{UWB3}), each propagation time piece of information being calculated from each first time piece of information (T₁) and each second timestamping piece of data (H₂);
▪ Comparing, by a comparator (COMP), the time information of propagating every third UWB signal (S_{UWB3})
▪ Synchronizing a clock of the mobile beacon (B_{M}) and a clock of each UWB radio beacon with each other according to the result of the comparisons of the propagation time information.

8. The method according to any of claims 1 to 7, comprising implementing, by means of a calculator, at least one calculation by trilateration of a relative position of the first UWB radio tag (ET1), from the first UWB signal (SUWB1) transmitted by said first UWB radio tag (ET1) and received by the mobile beacon (BM) and by at least two other UWB radio beacons.

9. The method according to any of claims 1 to 8, comprising:
▪ Receiving a first amount of UHF energy (E_{UHF1}) by the mobile beacon (B_{M}) by means of a UHF receiver (REC_{UHF});
▪ Comparing (COMP_1) the first amount of UHF energy (E_{UHF1}) received with a predetermined threshold energy value by means of a comparator (COMP);
▪ Transmitting (EMI) the first energizing signal by means of the transmitter of the mobile beacon (B_{M}) if the first amount of UHF energy (E_{UHF1}) received is less than the predetermined threshold energy value (E_{threshold});
▪ Reducing (RED) the energy transmitted by the transmitter of the mobile beacon (B_{M}) if the first amount of UHF energy (E_{UHF1}) received is greater than the predetermined threshold energy value (Ethreshold).

10. The method according to any of claims 1 to 9, comprising:
▪ Measuring a distance value (V_{dis}) between an object and the mobile beacon (B_{M}) by means of a distance sensor;
▪ Comparing (COMP_2), by means of a comparator, the distance value (V_{dis}) measured with a predetermined threshold distance value (Vthreshold);
▪ Modulating (MOD) the transmission of the first energizing signal by the UHF transmitter (EM_{UHF}) of the mobile beacon (B_{M}) if the distance value (V_{dis}) measured is less than the predetermined threshold distance value (V_{threshold}).

11. The method according to any of claims 1 to 10, wherein the first UWB signal (S_{UWB1}) received by the mobile beacon (B_{M}) is associated with a context piece of information corresponding to a piece of information on the environment in which the mobile beacon (B_{M}) operates, and wherein the first piece of information (Sₜᵣₐₙₛ₁) transmitted to the equipment of a data network (NET) comprises the context piece of information, the context piece of information being processed by processing means to determine an identification piece of data of the mobile beacon (B_{M}) having transmitted the first energizing signal originating transmission by the first UWB radio tag (ET₁) of said first UWB signal (S_{UWB1}) received by said mobile beacon (B_{M}).

12. A mobile beacon comprising means for transmitting an energizing signal, means for receiving UWB signals, a calculator and a memory, **characterized in that** it is configured to implement the method of any of claims 1 to 11.

13. The mobile beacon according to claim 12, comprising at least two transmission antennas (ANT_{EM}), each transmission antenna (ANT_{EM}) being configured to transmit at least one portion of the first energizing signal.

14. A mobile cart (C_{M}) comprising a mobile beacon (B_{M}) according to any of claims 12 to 13.

15. An element embedded by a user including a mobile beacon (B_{M}) according to any of claims 12 to 13.

16. A system comprising a mobile beacon according to any of claims 12 to 13 and comprising at least one first UWB radio tag (ET₁) configured to transmit the first UWB signal (S_{UWB1}).
